(19) Europäisches Patentamt
European Patent Office
Office européen des brevets

(11) **EP 2 908 098 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(51) Int Cl.:
*G01D 5/347* *(2006.01)*    *G01B 11/14* *(2006.01)*
*G01D 5/244* *(2006.01)*

(21) Anmeldenummer: **14155609.2**

(22) Anmeldetag: **18.02.2014**

(54) **Lineargeber mit Kalibrierfunktionalität**

Linear encoder with calibrating functionality

Capteur linéaire avec fonctionnalité d'étalonnage

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.08.2015 Patentblatt 2015/34**

(73) Patentinhaber: **Hexagon Technology Center GmbH**
**9435 Heerbrugg (CH)**

(72) Erfinder:
• **Vokinger, Urs**
**CH-9434 Au (CH)**
• **Lippuner, Heinz**
**CH-9445 Rebstein (CH)**
• **Siercks, Knut**
**CH-9402 Mörschwil (CH)**

(74) Vertreter: **Kaminski Harmann**
**Patentanwälte AG**
**Landstrasse 124**
**9490 Vaduz (LI)**

(56) Entgegenhaltungen:
**EP-A1- 1 659 373    EP-A2- 1 882 989**
**EP-A2- 2 587 224    DE-A1-102006 004 898**
**US-A- 4 590 527    US-B1- 6 486 467**

**Beschreibung**

Die Erfindung betrifft einen Lineargeber mit Kalibrierfunktionalität nach dem Oberbegriff des Anspruchs 1, ein Kalibrierverfahren für einen solchen Lineargeber nach dem Oberbegriff des Anspruchs 7 und ein ebensolches Computerprogrammprodukt.

Lineargeber zur präzisen Wegmessung sind in vielen Anwendungsbereichen gefordert, in denen die Position eines entlang eines linearen Weges beweglichen Gliedes, z.B. die Stellung einer Maschinenkomponente auf einer linearen Achse wie Antriebe oder Schwenkarme, zu bestimmen ist. Die dabei erfassten Stellungen können als Positionswerte zu Vermessungszwecken genutzt werden, oder auch für eine Positionierung von Komponenten durch einen Antrieb mit Positionsregelkreis. Solche linearen Positionsgeber finden sich entsprechend in Geräten wie Koordinatenmessmaschinen (CMM), geodätischen Geräten, Roboterarmen oder hydraulischen Aktuatoren. Ein Lineargeber weist dazu eine Massverkörperung und einen Lesekopf zu deren Abtastung auf, welche gegeneinander beweglich sind, sowie eine Steuer- und Auswerteeinheit zur Regelung von Messvorgängen und zur Zuordnung eines vom Lesekopf aufgenommenen Positionswerts zu einem Abtastsignal. Dabei sind je nach Anforderungen und baulichen Möglichkeiten entweder der Lesekopf stationär und die Massverkörperung beweglich, z.B. in dem die Massverkörperung mit einem beweglichen Objekt, dessen lineare Bewegung erfasst werden soll, verbunden ist, oder die Massverkörperung ist fest positioniert und der Lesekopf wird relativ dazu verfahren, beispielsweise indem ein mit einem Lesekopf versehener Messschlitten einer Koordinatenmessmaschine über einen an einem Messtisch angebrachten Skalenträger verfahren wird.

Die Abtastung der Massverkörperung erfolgt dabei berührungslos i.d.R. auf optischen, induktiven, magnetischen, oder kapazitiven physikalischen Prinzipien beruhend. Beispielsweise kann der Lesekopf Leuchtmittel aufweisen, welche eine Massverkörperung mit lichtreflektierenden oder lichtstreuenden (Auflichtabtastung) oder lichttransmittierenden (Durchlichtabtastung) Markierungen mit Licht bestrahlen. Das Licht trifft von dort auf einen lichtempfindlichen Aufnehmer eines Sensors, z.B. auf eine Photozelle oder ein CCD-Array. Weist die Massverkörperung lichtreflektierende Markierungen auf, ist der Sensor auf der gleichen Seite des Lesekopfs angebracht wie die Leuchtmittel. Im anderen Fall umgreift der Lesekopf seitlich die Massverkörperung und Sensor und Leuchtmittel sind in etwa einander gegenüberliegend in/an/auf dem Lesekopf angeordnet. Die Markierungen dienen als Codeelemente zur Codierung der relativen Position des Lesekopfs zur Massverkörperung. Die Codierung kann als inkrementeller Code ausgebildet sein, beispielsweise durch alternierende gleichartige Hell/Dunkel-Übergänge, Moire-Muster, oder für andere als optische Messverfahren als elektrische oder magnetische Polungen, oder als absoluter Code, z.B. durch eine Anzahl definiert unterschiedlicher Muster. Auch sind Kombinationen aus einem inkrementellen und absoluten Teilcode bekannt, z.B. zur Bestimmung je einer Grob- und Feinposition. Mögliche Realisierungsformen beispielsweise eines optischen Positionscodes finden sich z.B. in der Patentanmeldung EP 12175130.9.

Als Material für eine Massverkörperung eignen sich prinzipiell verschiedene Werkstoffe. Da die Codeelemente für definierte Positionswerte stehen sollen, müssen sie sich an dem den jeweiligen Positionswert repräsentierenden Ort relativ zum Lesekopf tatsächlich befinden. Heute sind solche Massverkörperungen häufig aus Stahlbändern, Kunststoffen, Glas oder Keramik gefertigt. Die Markierung wird für eine präzise Verortung hochgenau auf der Massverkörperung angebracht, was entsprechend hohe Anforderungen an das Herstellungsverfahren der Massverkörperung hinsichtlich der Fertigungstoleranzen stellt aber auch je nach gewünschtem Präzisionsgrad an die später erforderliche Kalibrierprozedur, die jedem Codewert einen Positionswert zuordnet, der dann üblicherweise in einer Speichereinheit des Lineargebers gespeichert wird. Es versteht sich, dass nach einer einmal erfolgten Verortung, z.B. durch Codekalibrierung, die Codeposition relativ zum Lesekopf konstant bleiben und sich nicht verändern soll. Bei den heute für Massverkörperungen typischerweise verwendeten Materialien führen aber Umwelteinflüsse, wie Temperatur- und Feuchtigkeitsschwankungen sowie Alterungsprozesse des Massverkörperungsmaterials zu Veränderungen, welche eine Ausdehnung bzw. Schrumpfung der Massverkörperung und damit eine Streckung bzw. Stauchung der Abstände der Codeelemente zueinander bewirken. Durch derlei Einflüsse kann es dann dazu kommen, dass der einem Codeelement durch die Speichereinheit zugeordnete Positionswert nicht mehr der tatsächlichen Relativlage von Lesekopf und Massstab entspricht. In der Offenlegungsschrift DE 19608978A1 wurde zur Vermeidung solcher Einflüsse vorgeschlagen als Material für die Massverkörperung einer lichtelektrischen Positionsmesseinrichtung eine Glaskeramik zu verwenden.

Entstehen aufgrund von Alterung oder Umwelteinflüssen Spannungen zwischen dem Material der Massverkörperung und dem Material des die Massverkörperung aufnehmenden Objekts, wie beispielsweise eines Messtischs, so kann sich die Massverkörperung als Ganzes relativ zum Lesekopf verschieben, wodurch sich die Nullpunktlage ändert. Um solchen Problemen entgegenzuwirken wurde eine Kombination von Materialien mit derart unterschiedlichen thermischen Ausdehnungskoeffizienten vorgeschlagen, dass sich Temperatureinflüsse insgesamt aufheben (siehe beispielsweise DE 19726173 A1). Viele dieser Beispiele wie auch die Versuche derart bedingte Fehler rechnerisch auszugleichen, vgl. beispielsweise WO 9935468 A1, erfordern allerdings eine Temperaturbestimmung zur korrekten Kompensation, welche eine vorangehende herstellerseitige Temperatureichung voraussetzt.

Die EP 1195880 A1 offenbart ein Verfahren zur Erhöhung der Positioniergenauigkeit eines relativ zu einem Lesekopf linear bewegbar angeordneten Stellelements eines Linearmotors, welches eine Massverkörperung aufweist. Die Massverkörperung weist einen inkrementellen Positionscode aus magnetischen Codeelementen auf. Der Lesekopf weist eine Steuer- und Auswerteeinheit und mindestens zwei voneinander beabstandete Sensoren auf, welche in diesem Beispiel als Hall-Sensoren ausgebildet sind und zur Kalibrierung des Stellelements genutzt werden. Der Abstand der Sensoren ist dabei angepasst an den Abstand, den zwei magnetische Codeelemente auf der Massverkörperung zueinander haben sollen, und ist im Idealfall gleich gross wie dieser. In einem Kalibrierlauf wird das Stellelement relativ zum Lesekopf verfahren und von beiden Sensoren werden Codeelemente erfasst und als Sensorsignale ausgegeben. Anhand der Sensorsignale und hinterlegter Information werden durch die Steuer- und Auswerteeinheit Sollpositionswerte ermittelt. Es wird jeweils eine Sollabstand aus der Differenz derjenigen beiden Sollpositionswerte gebildet, die sich bei zwei Positionierungen des Stellelements ergeben, welche (innerhalb einer Sinusperiode) aufeinander folgend einen gleichen Sensorsignalwert bei beiden Sensoren ergeben. Da der Ist-Abstand zweier solcher Positionierungen dem Betrag nach dem Abstand der beiden Sensoren zueinander entspricht, wird ein Sollpositionsfehler aus der Differenz des Sollabstands und des Ist-Abstands bestimmt. Dies wird, ausgehend von einer Nullstellung, sukzessive für alle aufeinander folgenden Positionierungen des Stellelements durchgeführt, wobei jeweils der vorherige Differenzwert zum an der aktuellen Position ermittelten Differenzwert addiert wird.

Nachteilig an dem in der EP 1195880 A1 beschriebenen Verfahren ist, dass der als Kalibriermass verwendete Abstand der Sensoren etwa so gross ist wie die Markierungsabstände des inkrementellen Positionscodes. Dies bedingt bei der Kalibrierung eine grosse Zahl sukzessiver Schritte, wodurch eine grosse Anzahl von Fehleradditionsschritten auftritt, welche eine mit der Anzahl zunehmende Unsicherheit bewirkt. Zusätzlich kann diese Unsicherheit durch kleine Störungen in der Sensorsignalerfassung verstärkt werden, welcher durch Fehlergewichtung entgegengewirkt werden muss. Die offensichtlich geforderte Positionsgenauigkeit liegt bei $>1\cdot10^{-4}$, was für hochpräzise Positions- bzw. Wegmessungen, wie sie bei Anwendungen wie Qualitätsprüfung, metrologischen Messungen, geodätischen Vermessungen usw. gefordert sind, unzureichend ist. Weitere Nachteile sind, dass verfahrensbedingt ein unkalibrierter Bereich bei der Nullstellung der Vorrichtung bestehen bleibt und dass der Abstand der Sensoren und der Abstand der Codeelemente auf der Massverkörperung aufeinander abgestimmt sein müssen. Zudem werden in der EP 1195880 A1 Umwelteinflüsse oder Alterungsphänomene nicht berücksichtigt. Gleichwohl können solche eine Änderung des Abstands der Sensoren zueinander verursachen, wodurch die Fehlerwertermittlung sehr nachteilig verfälscht werden kann.

Die Aufgabe der vorliegenden Erfindung besteht daher in der Bereitstellung eines verbesserten, zuverlässigeren Lineargebers und eines verbesserten Kalibrierverfahrens für einen solchen Lineargeber.

Diese Aufgabe wird erfindungsgemäss durch die Merkmale der unabhängigen Ansprüche und/oder durch Merkmale der abhängigen Ansprüche gelöst bzw. diese Lösungen weitergebildet.

Die vorliegende Erfindung betrifft einen Lineargeber mit Massverkörperung zur hochpräzisen Wegmessung, welcher ein Kalibriermittel aufweist und ein Kalibrierverfahren zur Kalibrierung der Massverkörperung des Lineargebers. Die Massverkörperung erstreckt sich entlang einer linearen Achse. Die Massverkörperung weist eine Positionscodemarkierung aus einzelnen Codeelementen auf. Hierzu finden die Codeelemente beispielsweise eine Entsprechung in einer Bitfolge mit zugehörigen Strichnummern, welche in der Steuer- und Auswerteeinheit hinterlegt sind. Der Lineargeber weist einen Lesekopf zum Erfassen der Codeelemente und eine Steuer- und Auswerteeinheit mit Speichereinheit und Kalibrierfunktionalität zur Kalibrierung der Positionscodemarkierung der Massverkörperung auf. In welcher Form die Erfassung von Codeelementen erfolgt, beispielsweise durch optische, magnetische, induktive oder kapazitive Erfassung von in eindimensionaler, zweidimensionaler oder dreidimensionaler Form ausgebildeten Codeelementen, ist nicht von Bedeutung. Als Codierung eignen sich alle Arten von Code, welche eine Bestimmung einer absoluten oder relativen Position zulassen, wie beispielsweise Maximalfolgen, verschiedenste binäre Codierungen, analoge Intensitätsverläufe, etc.

Lesekopf und Massverkörperung sind entlang der linearen Achse der Massverkörperung relativ zueinander beweglich. Beispielsweise kann der Lineargeber als Bestandteil eines Linearmotors einen stationären Lesekopf aufweisen und eine Massverkörperung, die am Stellglied des Motors befestigt ist, kann mit diesem bewegbar sein. Alternativ kann die Massverkörperung, beispielsweise bei einem Lineargeber als Teil einer Koordinatenmessmaschine, unbeweglich montiert sein und der Lesekopf z.B. entlang einer Halterungsschiene relativ zu ihr verfahrbar sein.

Der Lesekopf weist eine Sensoreinheit auf zur, vorzugsweise berührungslosen, Abtastung der Massverkörperung, beispielsweise zum optischen, induktiven, magnetischen oder kapazitiven Erfassen von Codeelementen. In bevorzugten Ausführungsformen des Lineargebers erfolgt das Erfassen opto-elektronisch oder kapazitiv-elektronisch. Dabei ist die Sensoreinheit derart ausgebildet, dass mit ihr wenigstens zwei Codeelemente in einem Schritt erfassbar sind, ohne den Lesekopf dazu relativ zur Massverkörperung verschieben zu müssen. Dazu kann die Sensoreinheit z.B. wenigstens zwei Sensoren mit jeweils punktförmigem Erfassungsfeld aufweisen oder wenigstens einen Sensor mit wenigstens einem ausgedehnten Erfassungsbereich, ausgestaltet beispielsweise als Flächen- oder Zeilensensor. Die Sensoreinheit weist wenigstens einen ersten und einen zweiten Erfassungsbezugspunkt auf. Dies können beispielsweise die punktförmigen Erfassungsfelder selbst sein oder Nullpunkte eines oder mehrerer Erfassungsbereiche. Das Erfassen in einem Schritt, bei unveränderter Relativpositionierung des Lesekopfs zur Massverkörperung, erfolgt so, dass wenigstens ein Codeelement in Bezug zum ersten Erfassungsbezugspunkt und wenigstens ein Codeelement in Bezug zum zweiten Erfassungsbezugspunkt erfasst wird.

Hierbei bedeutet ein Erfassen in Bezug zu einem Erfassungsbezugspunkt, dass die Position eines Codeelements, insbesondere bezüglich der Erstreckungsrichtung der Massverkörperung, relativ zum Erfassungsbezugspunkt erfasst wird. Weist die Massverkörperung z.B. eine kontinuierliche Positionscodemarkierung auf, kann der Positionsbezug dadurch hergestellt werden, dass genau dasjenige Codeelement erfasst wird, dass im Erfassungsbezugspunkt selbst, ohne Versatz zu diesem, erfasst wird. Beispielsweise bei einem analogen, kontinuierlichen Intensitätsverlauf und Sensor mit punktförmigem Erfassungsfeld wird dazu schlicht die Intensität im punktförmigen Erfassungsfeld erfasst. Alternativ kann bei einer diskontinuierlichen Positionscodemarkierung (z.B. Strichcode) ein Codeelement in Bezug zu einem Erfassungsbezugspunkt erfasst werden, indem die Distanz zum Erfassungsbezugspunkt bestimmt wird. Insbesondere bei einer diskontinuierlichen Positionscodemarkierung, z.B. aus diskreten Hell-Dunkel-Übergängen, weist der Lineargeber hierzu wie beschrieben Sensoren mit wenigstens einem ausgedehnten Erfassungsbereich auf. Eine Distanzbestimmung kann beispielsweise dadurch erfolgen, dass ein durch das Erfassen erzeugtes Signal in seiner Signalstärke mit einer Referenzsignalstärke verglichen wird. Die Referenzsignalstärke, ist dabei die Signalstärke, die bei einer versatzlosen Erfassung detektierbar wäre. Eine solche Referenzsignalstärke kann in der Steuer- und Auswerteeinheit hinterlegt sein oder anhand weiterer Abtastungen ermittelt werden. Erfolgt ein Erfassen opto-elektronisch, kann eine Distanz z.B. durch Ermitteln der Position eines Helligkeitspeaks auf einem positionssensitiven Detektor erfolgen, wobei vorzugsweise der Detektornullpunkt den Erfassungsbezugspunkt darstellt. Alternativ oder zusätzlich kann bei Vorliegen von Codeelementen, welche als Muster ausgebildet sind, eine Distanz anhand der erfassten Lage eines oder mehrerer Muster bestimmt werden. Hierzu kann beispielsweise auch mit einer Bilderkennungssoftware gearbeitet werden, wobei die Muster entweder beim Kalibrieren in der Steuer- und Auswerteeinheit hinterlegt werden oder allenfalls bereits dort hinterlegt sind.

Die Erfassungsbezugspunkte sind mittels eines Substrats in einem definierten Abstand entlang der linearen Achse zueinander fixiert, wodurch wenigstens ein Erfassungsabstand festgelegt ist. Der Erfassungsabstand ist für eine Kalibrierung hochpräzise mit einem Fehler von maximal $5 \cdot 10^{-6}$ bestimmt und definiert ein Eichmass. Zur hochpräzisen Bestimmung des Erfassungsabstands und damit des Eichmasses weist der Lineargeber in einer Ausführungsform eine Präzisionsmesseinrichtung auf, mit der der Erfassungsabstand jederzeit messbar ist, insbesondere auch während der Bestimmung der Relativposition von Geberelement und Lesekopf, wobei die Präzisionsmessung vorzugsweise opto-elektronisch erfolgt. In einer anderen Ausführungsform des Lineargebers ist das Substrat, mittels welchem die Sensoren und somit die Erfassungsbezugspunkte der Sensoreinheit zueinander in ihren Positionen fixiert und bestimmt sind, aus einem Material gefertigt, welches form- und alterungsbeständig ist und einen thermischen Ausdehnungskoeffizienten mit einem Betrag im Bereich von 0 bis höchstens $5.10^{-6}$ $K^{-1}$ aufweist. Das Eichmass wird dann dadurch hochpräzise bestimmt, das der Erfassungsabstand, also der Abstand wischen den beiden Erfassungsbezugspunkten, herstellerseitig vor dem Einbau der Sensoreinheit hochpräzise gemessen und in der Speicher- und Auswerteeinheit als Eichmass hinterlegt wird, wobei vorzugsweise mit einem relativen Fehler von maximal $5 \cdot 10^{-6}$ gemessen wird. Dadurch ist der Lineargeber mit einem Eichmass zur hochpräzisen Kalibrierung des Positionscodes durch das erfindungsgemässe Kalibrierverfahren versehen. Im Sinne der Erfindung wird im Weiteren ein Eichmass als eine Länge aufgefasst, welche durch einen Erfassungsabstand festgelegt ist.

Im Rahmen des Kalibrierverfahrens erfolgen die folgenden Schritte:

- Ein Codeelement wird in Bezug zum ersten Erfassungsbezugspunkt erfasst. Dieses dient als erstes Startcodeelement. Ein solches erstes Startcodeelement kann insbesondere ein äusserstes Codeelement auf der Massverkörperung sein. Im gleichen Schritt wird in Bezug zum zweiten Erfassungsbezugspunkt ein zweites Codeelement erfasst. Werden die beiden erfassten Codeelemente jeweils versatzfrei zu den Erfassungsbezugspunkten erfasst, entspricht ihr realer Abstand zueinander einem Erfassungsabstand und damit einem Eichmass. Ist ein Erfassen mit Versatz zu einem Erfassungsbezugspunkt erfolgt, ist ihr realer Abstand entsprechend um die dabei bestimmte(n) Distanz(en) zu dem (den) Erfassungsbezugspunkt(en) vermindert oder erhöht.

- Ausgehend von einem Startpositionswert des Startcodeelements wird anhand des Eichmasses ein rechnerischer Positionswert für das zweite Codeelement mathematisch berechnet. Unter einem rechnerischen Positionswert wird im Rahmen der Erfindung ein Positionswert verstanden, der für ein erfasstes Codeelement unter Verwendung des Eichmasses mathematisch berechnet wird. Erfolgt ein Erfassen in Bezug zu den Erfassungsbezugspunkten versatzfrei, befinden sich also beispielsweise die beiden Codeelemente in zwei punktförmigen Erfassungsfeldern, welche die beiden Erfassungsbezugspunkte festlegen, wird ein rechnerischer Positionswert berechnet, indem zum Startpositionswert des Startcodeelements ein Eichmass addiert wird. Erfolgt ein Erfassen mit Versatz zu einem oder beiden Erfassungsbezugspunkten, wird entsprechend ein rechnerischer Positionswert berechnet, indem zum Startpositionswert des Startcodeelements ein Eichmass und die bestimmte(n) Distanz(en) (inklusive ihrer entsprechenden Vorzeichen) zu dem oder den Erfassungsbezugspunkt(en) addiert werden. Der rechnerische Positionswert ist somit hier die Summe der Eichmasse, die ein Codeelement von einem Startcodeelement entfernt ist plus der gemessene Versatz/die gemessene Distanz (inkl. Vorzeichen) zum Erfassungsbezugspunkt.

- Auf Grundlage des rechnerischen Positionswerts wird ein kalibrierter Positionswert des zweiten Codeelements generiert und in der Speichereinheit hinterlegt. Unter einem kalibrierten Positionswert wird im Rahmen der Erfindung ein Positionswert verstanden, welcher für ein Codeelement als "wahrer" Positionswert für nachfolgende Messvorgänge des Lineargebers in der Speichereinheit hinterlegt wird und welcher auf einem rechnerischen Positionswert basiert. Beispielsweise kann hierzu der rechnerische Positionswert selbst als kalibrierter Positionswert übernommen und in der Speichereinheit hinterlegt werden, wodurch also der rechnerische mit dem kalibrierten Positionswert identisch ist. Alternativ kann beispielsweise zur Erzeugung eines kalibrierten Positionswerts zusätzlich eine Differenz zwischen Eichmass und realem Abstand berücksichtigt werden.
- In einem weiteren Schritt wird der Lesekopf aus dieser ersten Stellung um etwa ein Eichmass entlang der Massverkörperung in eine zweite Stellung verschoben. In dieser zweiten Stellung ist dann das zweite Codeelement im Bereich des nachlaufenden ersten Erfassungsbezugspunktes erfassbar und ein weiteres Codeelement, welches etwa ein Eichmass vom zweiten Codeelement entfernt auf der Massverkörperung angeordnet ist, im Bereich des vorlaufenden zweiten Erfassungsbezugspunktes erfassbar.
- Analog wie für das zweite Codeelement kann nun für das weitere Codeelement ein rechnerischer bzw. kalibrierter Positionswert generiert werden.

Um die Anzahl Erfassungsschritte und damit die sich mit jedem Schritt aufaddierenden Fehler zu minimieren, ist es vorteilhaft, wenn das Eichmass bzw. der Erfassungsabstand zwischen zwei Erfassungsbezugspunkten gross ist. Besonders vorteilhaft ist es, wenn das Eichmass nicht kleiner oder gleich dem Abstand zweier Codeelemente zueinander ist, sondern eine Längenausdehnung aufweist, welche mehrere Codeelemente der Massverkörperung übergreift.

Für das Startcodeelement wird im Rahmen der Kalibrierung ein Startpositionswert festgelegt. Insbesondere kann der Startpositionswert als Nullpunkt der Positionscodemarkierung festgelegt und als solcher in der Speichereinheit hinterlegt werden. Alternativ kann ein Startpositionswert anhand in der Speichereinheit hinterlegter Information bestimmt werden, beispielsweise indem ein hinterlegter Sollpositionswert für das Startcodeelement verwendet wird.

Durch Verschieben des Lesekopfs entlang der Massverkörperung können in gleicher Weise anhand des Eichmasses für weitere Codeelemente kalibrierte Positionswerte bestimmt werden. Der Lesekopf wird dabei so verschoben, dass sukzessive alle im Laufe der Verschiebung erfassten Codeelemente jeweils in Bezug zum vorlaufenden und in Bezug zum nachlaufenden Erfassungsbezugspunkt erfasst werden. Einzig das Startcodeelement wird nur in Bezug zum nachlaufenden Erfassungsbezugspunkt erfasst und das Codeelement am Ende der Verschiebung wird nur in Bezug zum vorlaufenden Erfassungsbezugspunkt erfasst. Es entsteht also eine Reihe von miteinander verketteten, erfassten Codeelementen, welche anhand des definierten Erfassungsabstands und damit des Eichmasses in bekannter Positionsrelation zueinander stehen, insbesondere wobei im Idealfall der Abstand eines jeweiligen Codeelementes zum Startcodeelement ein ganzzahliges Vielfaches des Eichmasses beträgt. Ausgehend vom Startpositionswert des Startcodeelements kann analog dem Vorgehen für das zweite Codeelement ein rechnerischer Positionswert für alle weiteren Codeelemente berechnet und anhand dessen ein kalibrierter Positionswert hinterlegt werden. Für ein drittes Codeelement, welches in Bezug zum vorlaufenden Erfassungsbezugspunkt erfasst wird, wenn nach Verschieben des Lesekopfs im gleichen Schritt das zweite Codeelement in Bezug zum nachlaufenden Erfassungsbezugspunkt erfasst wird, erfolgt das Erstellen eines kalibrierten Positionswerts mit Hilfe des doppelten Eichmasses. Für die kalibrierten Positionswerte anschliessender Codeelemente wird entsprechend ein dreifaches, vierfaches, usw. des Eichmasses verwendet. Die so erstellten Korrekturwerte bilden einen ersten Kalibrierkamm. Werden die kalibrierten Positionswerte idealerweise durch Addition ganzzahliger Vielfacher des Eichmasses berechnet, ergibt sich die Länge L des ersten Kalibrierkamms als Summe einer Anzahl P von Eichmassen s, wobei die Anzahl P der Zahl der erfassten zweiten Codeelemente entspricht: $L = \sum_{1}^{P} s$ .

Beim Bilden eines Kalibrierkamms kann es vorkommen oder vorteilhaft sein, dass nicht alle Codeelemente in Bezug zu einem Erfassungsbezugspunkt erfasst werden. Solche Codeelemente können beispielsweise am Ende der Massverkörperung vorkommen oder falls eine Kalibrierkammbildung nur für einen Abschnitt der Codemarkierung gewünscht ist. Insbesondere um für diese Codeelemente kalibrierte Positionswerte zu bestimmen, kann auf Grundlage der rechnerischen Positionswerte zumindest abschnittsweise eine Kalibrierfunktion erzeugt werden, welche die rechnerischen Positionswerte mathematisch beschreibt. Kalibrierte Positionswerte für einzelne bis dahin noch nicht erfasste und kalibrierte Codeelemente werden dann anhand der Kalibrierfunktion bestimmt. Natürlich kann die mathematische Kalibrierfunktion zur Überprüfung oder Neubestimmung von kalibrierten Positionswerten auch auf bereits erfasste und kalibrierte Codeelemente angewandt werden. Anhand einer solchen Kalibrierfunktion können kalibrierte Positionswerte auch durch Interpolation und/oder Extrapolation bestimmt und hinterlegt werden.

In einer weiteren Ausführungsform sind in der Steuer- und Auswerteeinheit vor einer erfindungsgemässen Kalibrierung Informationen hinterlegt, anhand derer zu erfassten Codeelementen Sollpositionswerte bestimmbar sind. Ein Sollpositionswert ist im Sinne der Erfindung ein Positionswert, welcher in der Speichereinheit bereits vor Durchführung des Kalibrierverfahrens hinterlegt ist und eine ideale Position eines Codeelements angibt, welche von seiner realen Position abweichen kann. Beispielsweise können von einer Positionscodemarkierung die idealen Positionen und/oder die idealen Abstände der Codeelemente zueinander bekannt sein und vor Auslieferung des Geräts in Form einer Codetabelle in der Speichereinheit hinterlegt sein. Sind beispielsweise für die einzelnen Codeelemente die idealen Sollpositionswerte in der Codetabelle hinterlegt können diese den während der Kalibrierung erfassten, realen Codeelemente der Positionscodemarkierung zugeordnet werden. Aufgrund der weiter oben beschriebenen Umwelt- oder Alterungseinflüsse kann es sein, dass ein solcher Sollpositionswert nicht der tatsächlich gegebenen Position des Codeelements entspricht, weswegen im Rahmen des Kalibrierverfahrens Korrekturwerte für die Sollpositionswerte der erfassten Codeelemente anhand der rechnerischen Positionswerte für die erfassten Codeelemente bestimmt werden. Unter einem Korrekturwert wird ein anhand des erfindungsgemässen Kalibrierverfahrens bestimmter Wert verstanden, der die tatsächliche Position eines Codeelements relativ zu dem ihm zugeordneten Sollpositionswert angibt. In anderen Worten handelt es sich bei einem Korrekturwert also um eine Fehlerangabe für einen Sollpositionswert. Dazu wird ein wie oben beschrieben berechneter rechnerischer Positionswert mit dem Sollpositionswert des entsprechenden Codeelements verglichen und eine dadurch bestimmte Abweichung als Korrekturwert in der Speichereinheit hinterlegt. Die Kombination von Korrekturwert und zugehörigem Sollpositionswert steht anschliessend als kalibrierter Positionswert für eine Wegmessung zur hochpräzisen Positionsbestimmung zur Verfügung. Ein solcher Korrekturwert kann auch als Korrekturwert für benachbarte Codeelemente verwendet werden, die nicht im Rahmen einer Kammbildung erfasst sind. Alternativ kann auch bei der vorliegenden Ausführungsform, also bei Vorliegen von Sollpositionswerten, - wie weiter oben beschrieben - der rechnerische Positionswert selbst oder ein aus rechnerischen Positionswerten abgeleiteter Positionswert als kalibrierter Positionswert in der Speichereinheit hinterlegt werden, ohne Bestimmung einer Abweichung und damit eines Korrekturwerts. Dann ersetzt ein kalibrierter Positionswert den bereits im Speicher vorhandenen Sollpositionswert.

In einer alternativen Ausführungsform weist der Lesekopf eine Schreibeinheit auf, welche in Bezug auf die Sensoreinheit vorlaufend ist und mit der auf die Massverkörperung Codeelemente geschrieben werden, welche eine Positionscodemarkierung bilden. Die mittels der im Lesekopf befindlichen Schreibeinheit erstellten Codeelemente werden anhand des Eichmasses der Sensoreinheit mit dem oben beschriebenen Verfahren kalibriert. In einer weiteren alternativen Ausführungsform verfügt der Lineargeber anstelle einer Schreibeinheit im Lesekopf zum Schreiben von Codeelementen über einen separaten Schreibkopf, welcher für den Schreibvorgang zusätzlich oder anstelle des Lesekopfs montierbar ist.

Damit die Massverkörperung durch das Schreibmittel bzw. den Schreibkopf beschreibbar ist und die Codeelemente durch den Lesekopf erfassbar sind, sind diese drei Komponenten abgestimmt aufeinander ausgestaltet. Beispielsweise ist bei optoelektronischen Sensoren die Massverkörperung aus einem lichtempfindlichen Material, welches durch das Schreibmittel belichtet wird, wodurch an den belichteten Stellen Codeelemente gebildet werden, die durch die optoelektronischen Sensoren erfassbar sind. Alternativ ist die Massverkörperung aus einem Material wie Metall oder Glas, welches durch das Schreibmittel an gezielten Stellen z.B. durch Ritzen oder Lasern bearbeitet wird, so dass durch Veränderung der Eigenschaften des Materials oder durch Materialabtrag Codeelemente entstehen die optoelektronisch erfassbar sind. Als weitere Alternativen werden Codeelemente z.B. durch Magnetisierung oder Materialauftragung (beispielsweise Farb- oder Kunststoffauftrag mit elektrisch leitfähigen oder magnetischen Partikeln) geschrieben. Geschrieben werden somit Codeelemente, welche abgestimmt auf die Sensoren des Lesekopfs durch diese beispielsweise kapazitiv bzw. den Hall-Effekt nutzend erfassbar sind.

Zur hochpräzisen Bestimmung des Erfassungsabstands und damit des Eichmasses weist der Lineargeber in einer Ausführungsform eine Präzisionsmesseinrichtung auf, mit der der Erfassungsabstand jederzeit, insbesondere opto-elektronisch, messbar ist. Eine solche Präzisionsmesseinrichtung kann beispielsweise als Laserinterferometer ausgebildet sein, welches insbesondere Bestandteil des Lesekopfs ist. Als Bestandteil des Laserinterferometers befindet sich je eine optische Einheit in bekannter Position zu einem Erfassungsbezugspunkt, insbesondere, bezogen auf die lineare Achse, parallel versetzt zu diesem genau am Erfassungsbezugspunkt. Die optische Wegstrecke zwischen den beiden optischen Einheiten wird im Rahmen des Kalibrierverfahrens interferometrisch hochpräzise vermessen und die daraus bestimmte Länge als Eichmass in der Speichereinheit hinterlegt. Weitere Ausführungsformen eines Lineargebers mit einem integrierten Eichmass finden sich in den Figuren 2 bis 5 und den zugehörigen Beschreibungen der europäischen Patentanmeldung EP-14155582 "System zur Bestimmung von Relativpositionen" der gleichen Anmelderin, eingereicht am 18.2.2014, und sind hiermit integrativer Bestandteil der vorliegenden Anmeldung.

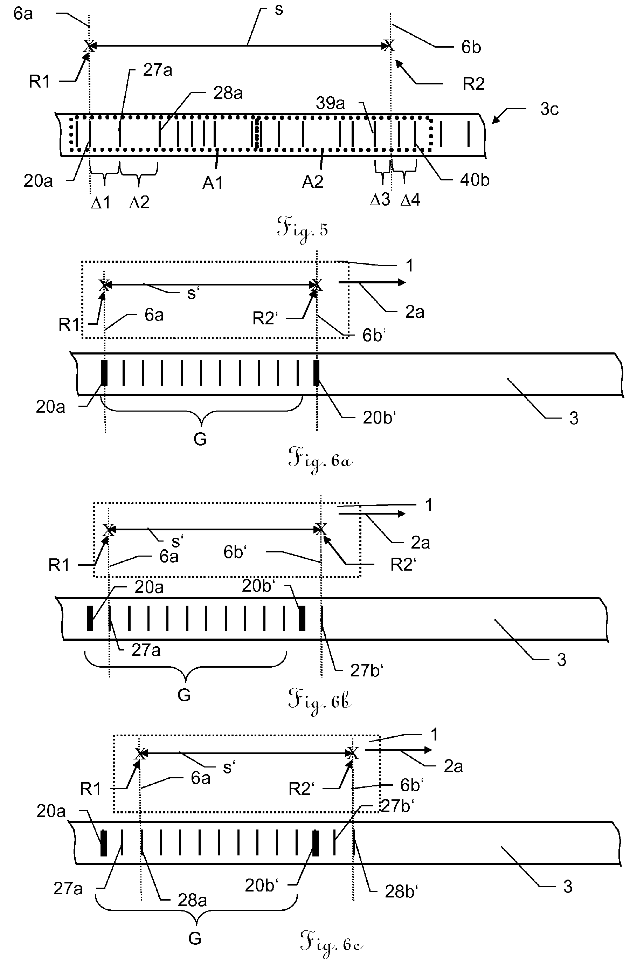

In einer anderen Ausführungsform des Lineargebers ist das Substrat, mittels welchem die Erfassungsbezugspunkte der Sensoreinheit fixiert sind, aus einem Material gefertigt, welches form- und alterungsbeständig ist und einen thermischen Ausdehnungskoeffizienten mit einem Betrag im Bereich von 0 bis höchstens $5 \cdot 10^{-6} K^{-1}$ aufweist. Das Eichmass wird dann dadurch hochpräzise bestimmt, das der Erfassungsabstand herstellerseitig vor dem Einbau der Sensoreinheit hochpräzise gemessen wird, vorzugsweise mit einem relativen Fehler von maximal $5 \cdot 10^{-6}$, insbesondere mit einem relativen Fehler von maximal $1 \cdot 10^{-6}$, im Speziellen mit einem relativen Fehler von maximal $5 \cdot 10^{-7}$. Das Substrat weist vorzugsweise einen Ausdehnungskoeffizienten auf, dessen Betrag nicht grösser als $1 \cdot 10^{-6} K^{-1}$, im Speziellen nicht grösser als $6 \cdot 10^{-7} K^{-1}$ ist. Die angegebenen Werte für den Betrag des thermischen Ausdehnungskoeffizienten werden insbesondere wenigstens für eine Temperatur des Substrats im Bereich von 273K bis 343K nicht überschritten, im Speziellen zumindest für eine Temperatur des Substrats im Bereich von 283K bis 303K. Beispiele für ein solches Material sind Quarzglas, spezielle Glaskeramiken wie Zerodur oder spezielle Metalllegierungen wie Invar. Realisierungsformen einer derartigen Sensoreinheit finden sich ebenfalls in der europäischen Patentanmeldung EP-14155582 "System zur Bestimmung von Relativpositionen" der gleichen Anmelderin, eingereicht am 18.2.2014, in den Beschreibungen zu den Ausführungsformen nach den Figuren 5 bis 8 und in den Figuren 5 bis 8, und sind hiermit integrativer Bestandteil der vorliegenden Anmeldung.

Der erfindungsgemässe Lesekopf weist also wenigstens ein Eichmass auf, welches durch den Erfassungsabstand von wenigstens zwei Erfassungsbezugspunkten festgelegt ist, die durch ein Substrat der Sensoreinheit zueinander beabstandet sind. Das Eichmass ist dadurch hochpräzise bekannt, dass das Substrat längenstabil ist und der Erfassungsabstand durch eine einmalige Präzisionsmessung, insbesondere durch externe Mittel, vor Montage des Lineargebers hochpräzise bestimmt ist und im Speicher hinterlegt wurde. Oder das Eichmass ist dadurch hochpräzise bekannt, dass der Erfassungsabstand durch eine immer wieder durchführbare, aktuelle Präzisionsmessung mittels einer lesekopfinternen Präzisionsmesseinrichtung bestimmbar ist. Beide Möglichkeiten sind kombinierbar. Es wird also eine von Umwelteinflüssen unabhängige, hochpräzis definierte Referenzlänge als Eichmass zur Verfügung gestellt, anhand welcher eine Kalibrierung der Massverkörperung durch den Lineargeber selbst, ohne auf eine externe Kalibriervorrichtung zurückgreifen zu müssen, jederzeit durchführbar ist.

Durch die vorliegende Erfindung wird also ein vorteilhafter Lineargeber bereitgestellt, welcher eine hochpräzise Weg- bzw. Positionsmessung ermöglicht bei wesentlich geringeren Anforderungen an die Massverkörperung als bei Lineargebern nach dem Stand der Technik hinsichtlich Präzision und Formstabilität, insbesondere in Bezug auf Alterungsbeständigkeit und thermisch bedingtem Ausdehnungsverhalten. Insbesondere liegt ein Vorteil des erfindungsgemässen Lineargebers darin, dass eine hochpräzise Weg- bzw. Positionsmessung unabhängig von Temperatureinflüssen auf die Massverkörperung möglich ist. Dieser Vorteil wird erreicht, ohne hierzu Temperaturbestimmungen vornehmen zu müssen. Auch ist es nicht erforderlich, die Massverkörperung ihrem mechanischen oder stofflichen Aufbau nach besonders zu fertigen.

Das Erreichen einer hohen Präzision ist nicht mehr wie bei Lineargebern nach dem Stand der Technik an Eigenschaften der Massverkörperung gebunden. Es erfolgt eine Verlagerung der Präzision von der Massverkörperung in den Lesekopf. Deshalb werden an die Massverkörperung nur geringe Anforderungen gestellt, sowohl hinsichtlich des Fertigungsmaterials und Aufbringung des Positionscodes als auch Montage und Wartung. Insbesondere kann die Massverkörperung aus mehreren Einzelstücken zusammengesetzt werden ohne dabei besondere Anforderungen an die Montage, vor allem hinsichtlich Ausführung und Qualität der Verbindungen der Einzelstücke, stellen zu müssen. Dadurch werden geringere Herstellungskosten der Massverkörperung und geringere Wartungskosten des Lineargebers als bei Lineargebern nach dem Stand der Technik ermöglicht. Die vorliegende Erfindung ermöglicht darüber hinaus den Verzicht auf ein spezielles Werkstück als Massverkörperung, welches z.B. auf dem beweglichen Glied anzubringen wäre. Stattdessen ist das relativ zum Lesekopf bewegliche Glied des Lineargebers selbst als Massverkörperung verwendbar, indem die Positionscodemarkierung auf dieses herstellerseitig oder durch das Schreibmittel des Lineargebers geschrieben wird. So sind z.B. der Messtisch einer CMM oder das Stellglied eines Linearantriebs erfindungsgemäss als Träger der Positionscodemarkierung geeignet, wodurch sich weitere Kostenvorteile ergeben.

Geringere Wartungskosten ergeben sich bei der vorliegenden Erfindung auch dadurch, dass ein Anwender den Lesekopf selbst auswechseln kann. Eine Wartung des Lineargebers bzw. eines Messsystems, welches den Lineargeber beinhaltet, wird auch dadurch vereinfacht, dass es nun möglich ist, nur den Lesekopf statt wie bisher das gesamte Messsystem an den Hersteller einzuschicken.

Ein weiterer Vorteil der vorliegenden Erfindung besteht in der Bereitstellung eines verbesserten Lineargebers, dessen Massverkörperung auf einfache Weise ohne externe Positionsbestimmungsmittel hochpräzise kalibrierbar ist, und eines entsprechenden verbesserten Kalibrierverfahrens. Damit sind Kalibriervorgänge der Massverkörperung auch nach Einbau des Lineargebers in eine Vorrichtung, z.B. eine Koordinatenmessmaschine, auf einfache Weise und vor jeder Messanwendung ermöglicht. Im Gegensatz zu Verfahren nach dem Stand der Technik ist ein Kalibrieren auch ohne Kenntnis von Sollpositionswerten der Codeelemente möglich. Insbesondere kann das Kalibrierverfahren automatisiert durchgeführt werden, was zusätzliche Zeit- und Kostenvorteile mit sich bringt. Eine Kalibrierung kann durch die Steuer- und Auswerteeinheit des Lineargebers selbstständig initiiert werden, entweder nach dem Vorkommen besonderer Ereignisse wie Erschütterungen oder Fehlermeldungen und/oder routinemässig in bestimmten Zeitintervallen. Denkbar ist freilich auch die Kombination mit einer Temperaturerfassung oder der Erfassung anderer Umwelteinflüsse, wobei eine automatische Kalibrierung bei Überschreiten eines z.B. bezüglich des Ausdehnungsverhaltens der Massverkörperung kritischen Wertes erfolgt.

Hinsichtlich einer Positionsbestimmung bei einer Wegmessung bietet der erfindungsgemässe Lineargeber den zusätzlichen Vorteil, dass durch das Vorhandensein wenigstens zweier Erfassungsbezugspunkte eine Positionsbestimmung robuster und/oder mit geringerem Fehler erfolgen kann, beispielsweise durch eine Mittelwertbildung aus zwei Positionswerten.

Zur weiteren Steigerung der Robustheit und/oder Genauigkeit einer Wegmessung und insbesondere der Kalibrierung und/oder für eine schnellere Durchführung der Kalibrierung kann in einer Ausführungsform des Lineargebers die Sensoreinheit wenigstens drei Erfassungsbezugspunkte aufweisen, wodurch wenigstens zwei Eichmasse definiert sind. Die Erfassungsabstände und damit die Eichmasse sind unterschiedlich gross. Insbesondere sind die Abstände so gewählt, dass wenigstens ein Eichmass kein ganzzahliges Vielfaches eines der anderen Eichmasse ist. Im Rahmen des Kalibrierverfahrens erfolgt ein Bestimmen eines Korrekturwertes wenigstens für einige Codeelemente anhand von wenigstens zwei unterschiedlichen Eichmassen, insbesondere anhand solcher, welche kein ganzzahliges Vielfaches voneinander sind.

Bei dem in der EP 1195880 A1 offenbarten Verfahren ist der Abstand der beiden Sensoren zueinander vom Abstand der Codeelemente abhängig. Im Gegensatz dazu ist bei der vorliegenden Erfindung die relative Position der Erfassungsbezugspunkte zueinander und damit das Eichmass bei allen Ausführungsformen im Wesentlichen unabhängig von der Distanz zweier Codeelemente auf der Massverkörperung gestaltbar. Dadurch kann das Eichmass z.B. so festgelegt sein, dass sich innerhalb des Eichmasses nicht nur die zwei in einem Schritt zu erfassenden Codeelemente, sondern mehrere Codeelemente der Massverkörperung befinden. Somit kann das Eichmass möglichst gross gewählt werden. Dies bietet den Vorteil, dass nur die Grösse des Lesekopfes die Grenze für den relativen Fehler des Eichmasses vorgibt. Dies ist insbesondere vorteilhaft, je feiner der gesamte Lineargeber bzw. die Massverkörperung und damit die Distanz der Codeelemente zueinander konzipiert ist. Zudem werden bei Verwendung eines relativ grossen Eichmasses gegenüber einem kleinen Eichmass weniger sukzessive Verschiebungsschritte für eine Kalibrierung der gesamten Positionscodemarkierung benötigt. Ein dadurch gebildeter Kalibrierkamm besteht aus weniger Werten wodurch die Zahl der sich aufaddierenden Fehler verkleinert wird.

Durch ein im Vergleich zu den Codeelementabständen bzw. zum Lesekopf relativ grosses Eichmass, welches sich über mehrere Codeelemente erstreckt, werden bei Erstellung eines ersten Kalibrierkamms nicht alle Codeelemente erfasst, sondern zwischen zwei in Bezug zum ersten und zweiten Erfassungsbezugspunkt erfassten Codeelementen verbleiben unerfasste, unkalibrierte Codeelemente.

Um für solche unerfassten, unkalibrierten Codeelemente kalibrierte Positionswerte zu bestimmen, können in einer Fortbildung des Kalibrierverfahrens weitere Kalibrierkämme gebildet werden. Dazu wird ein Codeelement, welches sich benachbart zum ersten Startcodeelement auf der Massverkörperung befindet, als weiteres Startcodeelement verwendet und davon ausgehend die Kalibierschritte des ersten Kalibrierkamms wiederholt. Im Sinne der Erfindung bedeutet "benachbart", dass die beiden Codeelemente nahe beieinander liegen und nicht, dass sich die beiden Codeelemente direkt nebeneinander befinden müssen. Als Startcodeelemente zur Bildung mehrerer Kalibrierkämme können solche Codeelemente dienen, die innerhalb eines Eichmasses benachbart sind. Insbesondere können dies alle Codeelemente innerhalb eines Eichmasses auf der Massverkörperung sein, jedoch auch nur eine bestimmte Auswahl davon, z.B. jedes dritte Codeelement. Ausgehend von den benachbarten Startcodeelementen werden für miteinander verkettete Codeelemente voneinander unabhängige Kalibrierkämme erstellt, wobei zu verschiedenen Kalibrierkämmen gehörige Codeelemente analog zu den Startcodeelementen benachbart zueinander sind.

In einer Fortbildung des Kalibrierverfahrens werden Abstände von Codeelementen zueinander auf der Massverkörperung bestimmt. Hierzu kann die Sensoreinheit in einer Ausführungsform des Lineargebers wenigstens zwei Erfassungsbereiche mit jeweils einem Erfassungsbezugspunkt aufweisen. Jeder Erfassungsbereich ist zur Erfassung wenigstens zweier Codeelemente in einem Schritt geeignet. Jedes Codeelement kann in Bezug zum Erfassungsbezugspunkt des jeweiligen Erfassungsbereichs erfasst werden. Hieraus sind eine Position des Codeelements auf der Massverkörperung relativ zum Erfassungsbezugspunkt und der Abstand zwischen diesem Codeelement und einem weiteren, im Erfassungsbereich dieses Erfassungsbezugspunkts liegenden Codeelement bestimmbar. Beispielsweise kann dazu die Position eines Codeelementabtastsignals auf einem Zeilen-oder Flächensensor der Sensoreinheit bestimmt werden. Ein Abstand von Codeelementen zueinander kann entweder anhand von deren Abständen zum Erfassungsbezugspunkt bestimmt werden oder direkt aus dem Abstand der Detektorpositionen des jeweiligen Abtastsignals.

Alternativ können Abstände auf der Massverkörperung von Codeelementen zueinander bestimmt werden, indem zuerst der Abstand eines jeden betrachteten Codeelements zu einem gemeinsamen Bezugscodeelement bestimmt wird. Ein solches Bezugscodeelement kann z.B. ein Startcodeelement sein oder ein beliebiges anderes Codeelement. Der zu bestimmende Codeelementabstand zwischen zwei Codeelementen wird dann ermittelt durch Bilden der Differenz aus dem Abstand des einen Codeelements zum Bezugscodeelement und dem Abstand des anderen Codeelements zum Bezugscodeelement.

Anhand der bestimmten Codeelementabstände können die zunächst nicht miteinander verknüpften Kalibrierkämme, insbesondere durch eine Ausgleichsrechnung, aufeinander bezogen werden. Beispielsweise können ausgehend vom Startpositionswert eines ersten Startcodeelements rechnerische Positionswerte für die weiteren Startcodeelemente anhand der Startcodeelementabstände berechnet werden. Ein solcher rechnerischer Startcodeelementpositionswert wird dann zur Erstellung der rechnerischen Positionswerte für die weiteren Codeelemente des jeweiligen Kalibrierkamms herangezogen.

Alternativ können ausgehend von einem rechnerischen Positionswert eines Codeelements eines Kalibrierkamms rechnerische Positionswerte für die zu den weiteren Kalibrierkämmen gehörigen benachbarten Codeelemente anhand der Codeelementabstände berechnet werden. Die rechnerischen Positionswerte der benachbarten Codeelemente dienen dann als Grundlage zur Berechnung der rechnerischen Positionswerte der weiteren Codeelemente eines jeweiligen Kalibrierkamms. Alternativ zur Verwendung gemessener Codeelementabstände kann ein Verknüpfen von Kalibrierkämmen anhand von in der Steuer- und Auswerteeinheit hinterlegter Information erfolgen. Eine solche Information können beispielsweise Sollpositionswerte von Codeelementen sein. Letztlich sind also alle rechnerischen Positionswerte ausgehend vom Startpositionswert des ersten Startcodeelements erstellbar.

In einer weiteren Fortbildung des Kalibrierverfahrens können für die Startcodeelemente selbst kalibrierte Positionswerte erstellt werden. Dadurch ist vorteilhaft auch der Bereich bei der Null- oder Ausgangsstellung des Lineargebers kalibrierbar, was vor allem bei einem relativ grossen Erfassungsabstand von Bedeutung ist. Hierzu wird eine Summe der Startcodeelementabstände gebildet, wobei die Startcodeelemente sich wie beschrieben innerhalb eines Eichmasses befinden. Diese Summe wird mit dem Eichmass verglichen und beispielsweise eine Abweichung bestimmt, z.B. durch Bilden einer Differenz aus Eichmass und Summe der Startcodeelementabstände. Anhand dieser Abweichung werden kalibrierte Positionswerte für die Startcodeelemente generiert. Insbesondere kann ein für alle Startcodeelemente gleicher, mittlerer Startcodeelementkorrekturwert anhand der Anzahl der Startcodeelemente und der Abweichung bestimmt werden, z.B. indem die Abweichung durch die Anzahl der Startcodeelemente geteilt wird. Oder es werden individuelle kalibrierte Positionswerte aus der Abweichung durch Gewichtung des individuellen Startcodeelementabstands erstellt. Welche der beiden Möglichkeiten, ggf. auch in abschnittsweiser Kombination, benutzt wird, kann beispielsweise davon abhängig gemacht werden, wie gleichmässig die Codeelemente auf der Massverkörperung verteilt sind. Falls die beiden am Rand des Eichmasses gelegenen Startcodeelemente sich entlang der linearen Achse in einem Abstand (Versatz) zum nach- bzw. vorlaufenden Erfassungsbezugspunkt befinden, kann zur Abweichungsbestimmung dieser Abstand ebenfalls gemessen werden. Ist innerhalb eines Eichmasses nur ein Startcodeelementabstand bestimmbar, weil nur zwei Startcodeelemente vorhanden sind, wird dieser eine Startcodeelementabstand -ohne Bilden einer Summe aus Startcodeelementabständen- zum Vergleichen und Bestimmen einer Abweichung zum Eichmass herangezogen.

Das Vergleichen eines Codeelementabstands bei zwei Codeelementen innerhalb eines Eichmasses bzw. einer Summe von Codeelementabständen bei mehreren Codeelementen innerhalb eines Eichmasses mit dem Eichmass und das Bestimmen einer Abweichung können analog auch für weitere Codeelemente erfolgen.

Zudem kann eine solche Abweichung als Gütemass für die Positionswertbestimmung des Lineargebers herangezogen werden, insbesondere hinsichtlich einer Fehlerbehaftung der Massverkörperung. Hierfür kann ein solches Abweichungsbestimmen auch unabhängig vom restlichen Kalibrierverfahren erfolgen, beispielsweise während eines laufenden Messbetriebs des Lineargebers. Überschreitet die Abweichung einen bestimmten Grenzwert, wird eine unzureichende Güte der bestimmten Positionswerte angenommen. Eine solche Abweichung kann z.B. bedingt sein durch eine Veränderung der realen Abstände der Codeelemente auf der Massverkörperung beispielsweise durch eine temperaturbedingte Ausdehnung/Schrumpfung oder eine altersbedingte Veränderung der Massverkörperung. Bei Überschreiten des definierten Abweichungsgrenzwerts kann ein Hinweis an einen Benutzer ausgegeben werden, beispielsweise in Form einer akustischen oder optischen Warnung, und/oder es kann automatisch eine Kalibrierung des Lineargebers initiiert werden. Somit kann also das Eichmass verwendet werden, um während des Messbetriebs die Genauigkeit der Positionscodemarkierung zu überprüfen.

Wie weiter oben beschrieben, kann es vorkommen oder vorteilhaft sein, dass nicht alle Codeelemente in Bezug zu einem Erfassungsbezugspunkt erfasst werden. In einer Fortbildung des Kalibrierverfahrens werden die gemessenen Codeelementabstände verwendet, um kalibrierte Positionswerte für derartige Codeelemente zu bestimmen, beispielsweise als Alternative zur Verwendung einer Kalibrierfunktion. Dazu wird der Codeelementabstand vom "unkalibrierten" Codeelement zu einem benachbarten Codeelement bestimmt, für das ein kalibrierter Positionswert vorliegt. Anhand dieses kalibrierten Positionswerts wird unter Berücksichtigung des Codeelementabstands ein rechnerischer Positionswert für das bis dahin "unkalibrierte" Codeelement bestimmt und als kalibrierter Positionswert für dieses Codeelement hinterlegt. Beispielsweise kann der gesuchte rechnerische Positionswert für das bisher "unkalibrierte" Codeelement durch Addition des Codeelementabstands zum rechnerischen oder kalibrierten Positionswert des benachbarten "kalibrierten" Codeelements bestimmt werden. Alternativ kann durch dem Fachmann bekannte Interpolationsverfahren ein rechnerischer Positionswert für "unkalibrierte" Codeelemente bestimmt werden, und zwar anhand von einem oder mehreren kalibrierten oder rechnerischen Positionswerten eines bereits erstellten Kalibrierkamms unter Berücksichtigung des jeweiligen bestimmten Codeelementabstands von einem "unkalibrierten" zum benachbarten "kalibrierten" Codeelement.

In einer weiteren Fortbildung des Kalibrierverfahrens werden Fehler von rechnerischen Positionswerten, welche entlang der Positionscodemarkierung periodisch auftreten, zumindest teilweise dadurch ermittelt, dass die Positionscodemarkierung zu einem imaginären Kreis zusammengeschlossen wird. Dazu wird ggf. durch virtuelles Anhängen eines Anfangsteils des Positionscodes eine Periode abgeschlossen, um die Positionscodemarkierung lückenlos schliessen zu können. Durch den Kreisschluss können periodische Fehler als Harmonische bestimmt werden und diese als eine zusätzliche Korrekturwerttabelle in der Speichereinheit hinterlegt werden.

In einer weiteren Fortbildung des Kalibrierverfahrens weist der Lesekopf neben seiner mindestens zwei Erfassungsbezugspunkte aufweisenden Sensoreinheit auch eine Schreibeinheit auf, welche in Erstreckungsrichtung mittels eines Substrats in einem definierten Abstand zur Sensoreinheit bzw. einem ihrer Erfassungsbezugspunkte fixiert ist. Die Distanz zwischen der Schreibeinheit und der Sensoreinheit bzw. dem besagten Erfassungsbezugspunkt (im Weiteren als Schreib-Lese-Abstand bezeichnet) ist wiederum entweder dadurch hochpräzise bekannt und daher als Eichmass verwendbar, dass er durch eine im Lesekopf vorhandene Präzisionsmesseinrichtung jederzeit vor und unter Umständen auch während des Gebrauchs hochpräzise gemessen und gespeichert wird, oder dadurch dass das Substrat aus dem beschriebenen alterungs- und temperaturbeständigen Material besteht (thermischer Ausdehnungskoeffizient mit einem Betrag im Bereich von 0 bis höchstens $5 \cdot 10^{-6}$ $K^{-1}$) und die Distanz einmal vor dem Einsatz des Geräts, vorzugsweise herstellerseitig, hochpräzise bestimmt und in der Speicher- und Auswerteeinheit hinterlegt ist. Mit "hochpräziser" Bestimmung bzw. Messung ist wiederum eine Messung bzw. Bestimmung des Schreib-Lese-Abstand mit einem Fehler von maximal $5 \cdot 10^{-6}$ gemeint.

Der Schreib-Lese-Abstand ist somit also analog zum Erfassungsabstand hochpräzise bestimmt bzw. bestimmbar und kann dadurch als Eichmass dienen. Die Massverkörperung ist zu Beginn des Kalibrierverfahrens zumindest weitgehend leer, d.h. sie weist kein Codeelement oder lediglich einige, insbesondere ein Startcodeelement auf. Das Beschreiben der Massverkörperung erfolgt dann dadurch, dass der Lesekopf ausgehend von einem Startcodeelement sukzessive verschoben wird und in einer jeweiligen Relativpositionierung von Lesekopf und Massverkörperung ein vorhandenes Codeelement (zu Beginn das Startcodeelement) durch die Sensoreinheit erfasst wird und in dieser Relativpositionierung ein Codeelement durch die Schreibeinheit auf bzw. in die Massverkörperung geschrieben wird. Das Kalibrieren der Codeelemente erfolgt dabei gleichzeitig mit dem Schreiben, da ja die Distanz zwischen Schreibeinheit und Erfassungsbezugspunkt des Sensors hochpräzise mit einem Fehler von maximal $5 \cdot 10^{-6}$ bestimmt ist und als Eichmass hinterlegt ist. Durch den hochpräzise festgelegten bzw. bestimmten Schreib-Lese-Abstand sind somit ausgehend von der Position wenigstens eines Startcodeelements die Positionen der durch die Schreibeinheit geschriebenen Codeelemente hochpräzise bekannt und also kalibriert.

Alternativ erfolgt die Kalibrierung bei einem Lineargeber mit einem Substrat aus dem beschriebenen alterungs- und temperaturbeständigen Material nicht mittels der hochpräzise Bestimmung des Schreib-Lese-Abstands sondern einfach basierend auf dem Wissen, dass der Schreib-Lese-Abstand mit Hilfe des gewählten Substrats konstant ist (mit einer Abweichung im Betrag von höchstens $5 \cdot 10^{-6}$). Statt den Schreib-Lese-Abstand genau in seiner Länge zu bestimmen bzw. zu kennen, wird eine Massverkörperung verwendet, die bereits eine Reihe von kalibrierten, also in ihrem Abstand zueinander genau bekannten, Startcodeelementen aufweist, welche auf einem kleinen Bereich der Massverkörperung einen Positionscode ergeben und welche die Grundlage des kalibrierten Schreibens von weiteren Codeelementen auf dem restlichen Bereich der Massverkörperung bilden.

Zur Verifizierung der während des Schreibens von Codeelementen vollzogenen Kalibrierung, kann, wenn dies als notwendig erachtet wird, eine Kalibrierung mittels der wenigstens zwei Erfassungsbezugspunkte der Sensoreinheit durchgeführt werden, so wie es weiter oben beschrieben wurde.

Die vorliegende Erfindung beinhaltet auch ein Computerprogrammprodukt oder Computer-Datensignal, verkörpert durch eine elektromagnetische Welle, mit Programmcode, zur Steuerung bzw. Durchführung des Kalibrierverfahrens.

Die einzelnen Schritte des Kalibrierverfahrens können in jeder geeigneten Reihenfolge ausgeführt werden. Insbesondere können die für die Kalibrierung nötigen Berechnungen in einer Matrix zusammengefasst sein und en bloc durchgeführt werden. Die Kontrolle und Ausführung des Verfahrens kann durch den Lineargeber selbst erfolgen oder mit Hilfe von geeigneten Datenübertragungsvorrichtungen ganz oder teilweise extern, z.B. durch eine angeschlossene Rechnereinheit.

Der erfindungsgemässe Lineargeber und das erfindungsgemässe Kalibrierverfahren werden nachfolgend anhand von in der Zeichnung schematisch dargestellten Ausführungsbeispielen rein beispielhaft näher beschrieben.

Im Einzelnen zeigen

Fig.1a   eine schematische Übersichtsdarstellung eines Lineargebers nach dem Stand der Technik,

Fig.1b   eine schematische Darstellung einer Sensoreinheit und einer Massverkörperung eines Lineargebers nach dem Stand der Technik,

Fig.2a-d   Beispiele für Lesekopf und Massverkörperung eines erfindungsgemässen Lineargebers,

Fig.3a-d   schematische Darstellungen des erfindungsgemässen Kalibrierverfahrens,

Fig.4a-c   schematische Darstellungen von Fortbildungen des erfindungsgemässen Kalibrierverfahrens,

Fig.5   schematische Darstellungen von Fortbildungen des erfindungsgemässen Kalibrierverfahrens.

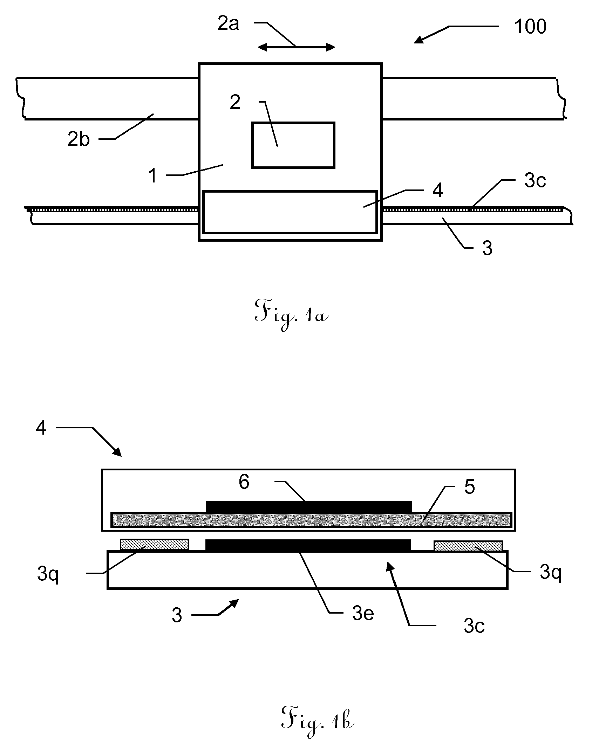

Fig.1a zeigt ein allgemeines Schema eines Lineargebers 100 nach dem Stand der Technik mit einem Lesekopf 1, der an einer Schiene 2b relativ zu einer stationären Massverkörperung 3 in linearer Richtung entlang der Erstreckungsrichtung der Massverkörperung 3 bewegt werden kann (angedeutet durch Doppelpfeil 2a), wodurch eine Messung eines linearen Wegs erfolgen kann. Zur Erzeugung einer Relativbewegung entlang einer Achse kann auch der Lesekopf 1 fest installiert sein und die Massverkörperung 3 relativ dazu verfahren werden, beispielsweise indem die Massverkörperung an einem zu messenden bewegten Objekt befestigt ist. Die Massverkörperung 3 weist eine Positionscodemarkierung 3c auf, welcher von einer Sensoreinheit 4 des Lesekopfs 1 teilweise erfasst wird. Durch Auswertung der durch das Erfassen generierten Signale der Sensoreinheit 4 kann eine Steuer- und Auswerteeinheit 2 des Lineargebers 100 die Position des Lesekopfs 1 in Bezug zur Massverkörperung 3 anhand von in einer Speichereinheit der Steuer- und Auswerteeinheit 2 hinterlegter Information bestimmen. Die Steuer- und Auswerteeinheit 2 ist zur Regelung von Messvorgängen geeignet.

Die Massverkörperung 3 ist hier dargestellt als Lineal mit einer inkrementellen Positionscodemarkierung 3c aus einzelnen gleichen Codeelementen, schematisch gezeichnet als in regelmässigem Abstand angebrachte Markierungen aus sich abwechselnden hellen und dunklen Abschnitten. Zur Bestimmung einer Lesekopfposition sind in der Speichereinheit 2 eine Startposition und die Positionsdistanz zwischen zwei Inkrementen hinterlegt. Der Code kann auch als Absolutcode ausgeführt sein, indem die Codeelemente bspw. als eine Folge verschiedenartiger Codemuster ausgebildet sind, welche durch die Steuer- und Auswerteeinheit 2 anhand der hinterlegten Information zumindest für Teilabschnitte der Massverkörperung 3 jeweils eindeutig einem Positionswert zugeordnet werden können. Beispiele für Positionscodes nach dem Stand der Technik finden sich in der EP 12175130.9, DE 19604502 A1, WO 01/61280 A1, US 2004189984 A1, DE 102008055680 A1 und US 7608813 B1.

Die vorgenannten Dokumente beziehen sich vorwiegend auf opto-elektronische Erfassungsmethoden. Im Hinblick auf die Erfindung können auch alternative Ausbildungen von Positionscodemarkierung 3c und Sensoreinheiten 4 angewendet werden. Geeignet sind alle physikalischen Wirkprinzipien, die sich zur Bestimmung eines Positionswertes eignen, z.B. induktive, kapazitive oder magnetische Messprinzipien, bei welchen elektrische oder magnetische Codeelemente von einer entsprechend ausgebildeten Sensoreinheit 4 erfasst werden.

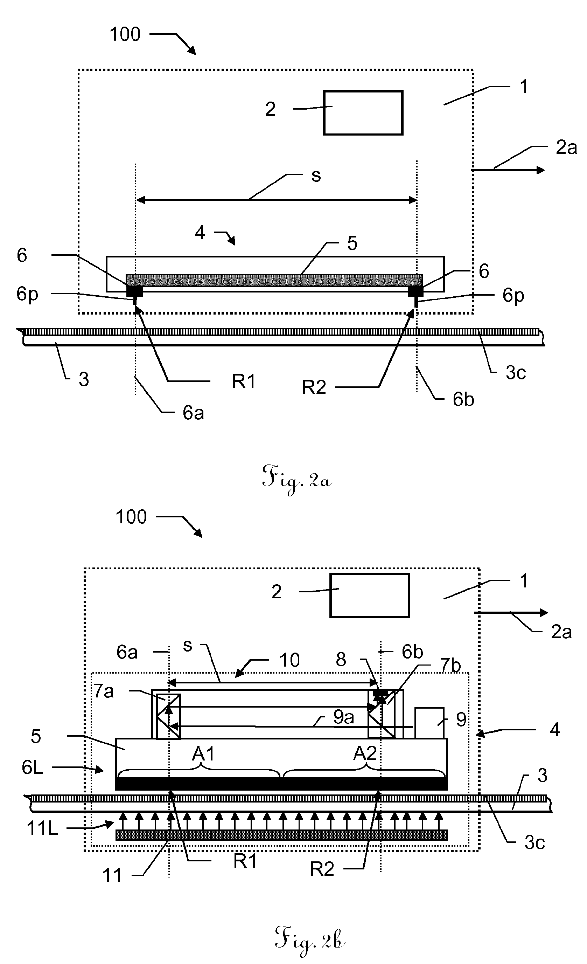

In Fig. 1b ist ein Ausschnitt eines erfindungsgemässen Lineargebers mit kapazitivem Messprinzip dargestellt, welcher eine Sensoreinheit 4 und eine Massverkörperung 3 umfasst, gezeigt in einem Schnitt senkrecht zur linearen Bewegungsrichtung des Lesekopfs bzw. linearen Erstreckungsrichtung der Massverkörperung 3. Die Massverkörperung 3 umfasst eine Positionscodemarkierung 3c aus kapazitiven Elementen 3e mit Versorgungsleitungen 3q. Die Sensoreinheit 4 weist auf einem Substrat 5 einen Sensor 6 auf, welcher der kapazitiven Erfassung der Codeelemente 3e der Positionscodemarkierung 3c dient. Fig. 2a zeigt ein Beispiel für einen erfindungsgemässen Lineargeber 100. Dessen Lesekopf 1 beinhaltet eine Sensoreinheit 4, welche zwei Sensoren 6 mit jeweils einem Erfassungsbezugspunkt R1 bzw. R2 aufweist. In Hinsicht auf die Bewegungsrichtung 2a des Lesekopfs 1 relativ zur Massverkörperung 3 ist mit R1 der nachlaufende Erfassungsbezugspunkt, mit R2 der vorlaufende Erfassungsbezugspunkt bezeichnet. Ein solcher Erfassungsbezugspunkt R1 oder R2 zeichnet sich dadurch aus, dass durch ein Erfassen eines Codeelements der Positionscodemarkierung 3c in Bezug zu einem Erfassungsbezugspunkt mittels eines Sensors 6 eine eindeutige Relativlage zwischen Lesekopf 1 und Codeelement zumindest in Richtung der linearen Bewegungsrichtung ermittelbar ist. Insbesondere kann ein Erfassungsbezugspunkt der Ursprung eines internen Koordinatensystems eines jeweiligen Sensors 6 sein. Bei einem zumindest in Richtung der Wegachse nahezu punktförmigen Erfassungsfeld eines Sensors 6 ist der Erfassungsbezugspunkt R1 bzw. R2 das Erfassungsfeld selbst, beispielsweise die Sensorspitze 6p eines jeweiligen Sensors 6. Ein Codeelement der Positionscodemarkierung 3c wird in Fig. 2a dann erfasst, wenn es sich - im Rahmen der Erfassungsgenauigkeit-senkrecht "unter" einer Sensorspitze 6p befindet (in der Figur durch die Linien 6a und 6b angedeutet).

Die Sensoren 6 sind auf einem Substrat 5 fix positioniert. Das Substrat 5 ist aus einem form- und alterungsbeständigen Material gefertigt, welches einen linearen thermischen Ausdehnungskoeffizienten dem Betrage nach im Bereich von 0 bis höchstens $5 \cdot 10^{-6} K^{-1}$ aufweist. Derartige Low-Thermal-Expansion-Materialien oder Ultra-Low-Thermal-Expansion-Materialien (LTE bzw. ULE) mit den geforderten Eigenschaften sind beispielsweise Glaskeramiken wie Zerodur oder andere Spezialkeramiken, Polymer-Keramik-Komposite wie Lithiumaluminosilikate (LAS), Quarzgläser, Borosilikatgläser wie Pyrex oder spezielle Eisen-Nickel-Legierungen (Invar). Erfindungsgemäss wird insbesondere ein Maximalwert des Ausdehnungskoeffizienten von $5 \cdot 10^{-6} K^{-1}$ wenigstens innerhalb eines Temperaturbereichs von 10°C bis 30°C nicht überschritten, welcher für viele Einsatzzwecke des Lineargebers 100 ausreichend ist. Für andere Einsatzzwecke und für eine bessere Lagerungsbeständigkeit wird ein Substrat verwendet, dessen Ausdehnungskoeffizient auch innerhalb eines Temperaturbereichs von -20°C bis 70°C den Wert von $5 \cdot 10^{-6} K^{-1}$ nicht überschreitet. In speziellen Ausführungsformen des erfindungsgemässen Lineargebers 100 weist jeweils das Substratmaterial für die benannten Temperaturbereiche einen linearen thermischen Ausdehnungskoeffizienten dem Betrage nach von 0 bis höchstens $1 \cdot 10^{-6} K^{-1}$, insbesondere bis höchstens $6 \cdot 10^{-7} K^{-1}$, auf. Durch die Anordnung der Sensoren 6 auf einem solchen Substrat ist der Abstand zwischen den Sensoren und damit zwischen den Erfassungsbezugspunkten R1 und R2 thermisch stabil und altersbeständig festgelegt.

Durch den Abstand der beiden Erfassungsbezugspunkte R1 und R2 zueinander ist ein Erfassungsabstand festgelegt. Vorzugsweise ist der Erfassungsabstand, wie in Fig. 2a dargestellt, grösser als der Abstand von Codeelementen zueinander, so dass sich zwischen zwei Erfassungsbezugspunkten R1 und R2 auf der Massverkörperung 3 bei dieser Ausführungsform stets mehrere Codeelemente befinden. Durch Bestimmen des Erfassungsabstands sind die jeweiligen Koordinatensysteme der Sensoren 6 miteinander verknüpfbar. Erfindungsgemäss wird durch den Erfassungsabstand ein Eichmass s zur Kalibrierung des Positionscodes 3c definiert, wobei die Kalibrierung mit Hilfe einer Kalibrierfunktionalität der Steuer- und Auswerteeinheit 2 des Lesekopfs 1 ausgeführt wird. Dieser Erfassungsabstand wird in diesem Beispiel herstellerseitig hochpräzise bestimmt und hinterlegt, beispielsweise so, dass das Eichmass mit einem relativen Fehler von $2 \cdot 10^{-6}$ definiert ist.

Durch die Anordnung der Sensoren 6 auf einem Substrat 5 mit den beschriebenen Eigenschaften wird erreicht, dass das Eichmass s den durch die herstellerseitige Vermessung bestimmten Wert im Rahmen sehr geringer Fehlergrenzen konstant beibehält. Insbesondere ist das Eichmass s durch die hochpräzise herstellerseitige Vermessung in Kombination mit den Stabilitätseigenschaften des Substrats unabhängig von Umwelteinflüssen mit einem relativen Fehler von maximal $5 \cdot 10^{-6}$, beispielsweise mit einem relativen Fehler von $1 \cdot 10^{-6}$, bestimmt.

Fig. 2b zeigt einen erfindungsgemässen Lineargeber 100, bei welchem die Sensoreinheit 4 einen Zeilensensor 6L auf einem Substrat 5 aufweist. Der Zeilensensor 6L weist zwei Erfassungsbereiche A1 und A2 mit zueinander beabstandeten Erfassungsbezugspunkten R1 und R2 auf. Z.B. kann die Sensoreinheit 4 und entsprechend eine Positionscodemarkierung 3c zum Bestimmen von Positionswerten mittels opto-elektronischem Prinzip ausgeführt sein. Der Lesekopf umgreift seitlich, z.B. in u-förmiger Ausgestaltung, die Massverkörperung. Zur einen Seite der Massverkörperung gerichtet ist am Lesekopf der Sensor angeordnet. Auf die gegenüberliegende Seite der Massverkörperung gerichtet ist ein Leuchtmittel am Lesekopf angeordnet. Dazu weist die Sensoreinheit 4 beispielsweise eine Beleuchtungseinheit 11 mit einer Vielzahl einzelner Punktlichtquellen oder einem kollimierten Lichtvorhang auf, welche die Positionscodemarkierung 3c mit gerichtetem Licht 11L bestrahlt. Im Beispiel basiert das Erfassen der Codeelemente auf dem Durchlichtverfahren. Durch die Massverkörperung 3 mit der Positionscodemarkierung 3c hindurchgehendes Beleuchtungslicht wird von einem der lichtrezeptiven opto-elektronischen Erfassungsbereiche A1 bzw. A2 wenigstens teilweise erfasst. Diese kann z.B. als ein in zwei Erfassungsbereiche A1 und A2 aufgeteilter CCD-Array ausgebildet sein zur positionssensitiven Erfassung von Projektionen oder Abbildungen der Codeelemente. Als Erfassungsbezugspunkt R1 bzw. R2 dient in einem jeweiligen Erfassungsbereich ein Nullpunkt des Erfassungsbereichs, welcher beispielsweise durch das Zentrum des CCD-Arrays festgelegt ist, wodurch seine genaue Lage bezüglich des Zentrums und hierüber zum anderen Erfassungsbezugpunkt bekannt ist. Ein Codeelement wird in Relation zu einem Erfassungsbezugspunkt, z.B. R1, erfasst, indem die Distanz der Abbildung auf einem solchen positionssensitiven CCD-Photodetektorbereich zu dessen Nullpunkt bestimmt wird, woraus anhand bekannter Abbildungsverhältnisse auf die Distanz des Codeelements selbst zur Projektion des Erfassungsbezugspunkts R1 auf der Massverkörperung in Richtung der linearen Erstreckung der Massverkörperung 3 geschlossen werden kann.

Die Sensoreinheit 4 kann in einem Schritt wenigstens ein Codeelement der Positionscodemarkierung 3c in Relation zu einem Erfassungsbezugspunkt R1 und ein weiteres Codeelement in Relation zu einem Erfassungsbezugspunkt R2 erfassen. Der Erfassungsabstand zwischen den beiden Erfassungsbezugspunkten ist wie gesagt vorbekannt und definiert ein Eichmass s, wodurch die Positionscodemarkierung der Positionscodemarkierung 3c unter Verwendung der Kalibrierfunktionalität der Steuer- und Auswerteeinheit 2 kalibrierbar ist.

In einer alternativen Ausgestaltungsform des erfindungsgemässen Lineargebers 100 ist - im Gegensatz zum Lineargeber 100 nach Fig. 2a - das Substrat 5 aus einem weniger formstabilen Material gefertigt. Bei dem erfindungsgemässen Lineargeber 100 nach Fig. 2b, der diese alternative Ausgestaltungsform darstellt, wird für eine Kalibrierung eine hochpräzise Definition des Eichmasses s dadurch erreicht, dass der Lesekopf 1 eine Präzisionsmesseinrichtung 10 aufweist, welche im Beispiel als Laserinterferometer ausgebildet ist. Das Interferometer besteht aus einer Laserquelle 9 zur Emission eines Laserstrahls 9a. Der Laserstrahl 9a wird durch einen Strahlteiler einer zweiten optischen Einheit 7b, welche sich in bekannter und fixer Position relativ zum Erfassungsbezugspunkt R2 befindet, teilweise auf eine erste optische Einheit 7a und teilweise auf einen für die Laserstrahlung sensitiven Photodetektor 8 geführt. Die erste optische Einheit 7a ist ausgebildet als Umlenkspiegel und befindet sich in bekannter und fixer Position relativ zum Erfassungsbezugspunkt R1. Sie dient der Rückstrahlung des bei ihr ankommenden Laserlichts, das dann in der zweiten optischen Einheit 7b zum Photodetektor 8 umgeleitet wird. Insbesondere sind die erste und die zweite optische Einheit 7a bzw. 7b so positioniert, dass sie lesekopfseitig auf einer Projektionsachse 6a bzw. 6b eines jeweiligen Erfassungsbezugspunkts R1 bzw. R2 senkrecht zur Massverkörperung liegen. Durch die optische Einheit 7a und einen Umlenkspiegel der optischen Einheit 7b wird der Teil der Laserstrahlung auf den Photodetektor 8 gelenkt, wo sie mit der vom Strahlteiler der optischen Einheit 7b direkt empfangener Laserstrahlung interferiert. Aus der Interferenzerscheinung kann in bekannter Weise auf einen relativen Abstand der Laserquelle 9 und der optischen Einheit 7a geschlossen werden und damit erfindungsgemäss die wie oben beschrieben vorbekannte Distanz der Erfassungsbezugspunkte R1 und R2 und das Eichmass s jederzeit hochpräzise bestimmt werden. Insbesondere ist dadurch erfindungsgemäss eine thermisch oder durch sonstige Umwelteinflüsse oder Alterungseinflüsse bedingte Änderung des Eichmasses s bestimmbar.

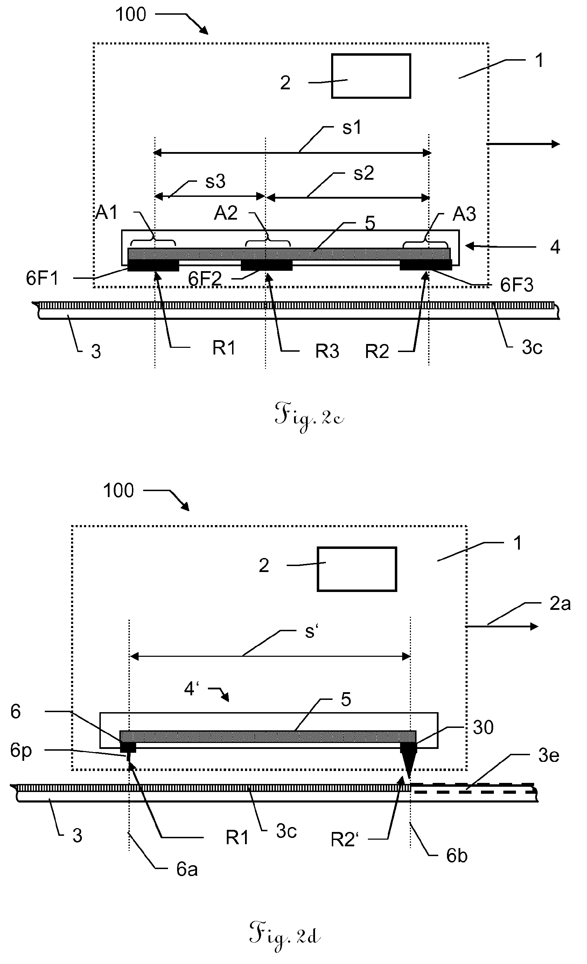

Fig. 2c stellt einen erfindungsgemässen Lineargeber 100 dar, welcher eine Sensoreinheit 4 mit mehreren, hier drei, Erfassungsbezugspunkten R1, R2 und R3 aufweist. Diese sind beispielsweise jeweils die Nullpunkte von drei Flächensensoren 6F1, 6F2, 6F3 mit jeweils einem Erfassungsbereich A1, A2, A3, welche jeweils eine Ausdehnung aufweisen, welche die gleichzeitige Erfassung mehrerer Codeelemente des Positionscodes 3c erlauben. Die Sensoren 6F1, 6F2, 6F3 sind auf einem Substrat 5 fixiert, welches aus einem form- und alterungsbeständigen (Ultra-) Low-Thermal-Expansion-Material gefertigt ist, wodurch die hochpräzis bekannten Erfassungsabstände zwischen den Erfassungsbezugspunkten R1, R1 und R3 konstant bleiben. Diese Erfassungsabstände definieren erfindungsgemäss drei Eichmasse s1, s2 und s3 unterschiedlicher Länge, wobei ein Eichmass jeweils mit einem relativen Fehler von höchsten $5 \cdot 10^{-6}$ definiert und in der Steuer- und Auswerteeinheit 2 hinterlegt ist. Die Erfassungsabstände sind insbesondere so gewählt, dass wenigstens ein Eichmass s1, s2, s3 kein ganzzahliges Vielfaches eines anderen Eichmasses s2, s3, s1 ist. Dies kann insbesondere bei optischen Lineargebern störende Moire-Muster, die bei Überlagerung periodischer Strukturen entstehen können, vermeiden helfen. Durch ein Vorliegen mehrerer Eichmasse s1, s2, s3 ist eine präzisere und/oder robustere Kalibrierung des Positionscodes 3c der Massverkörperung 3 mittels des Lesekopfs 1 möglich. Das Vorliegen mehrerer Sensoren 6F kann bei einer anschliessenden Wegmessung genutzt werden, um eine Position eines beweglichen Glieds noch präziser und/oder robuster zu gestalten, beispielsweise indem eine gemeinsame gemittelte Position aus den einzelnen Positionswerten bestimmt wird.

In Figur 2d ist eine Lesekopf 1 dargestellt, der ähnlich zu demjenigen, der in Figur 2a gezeigt ist, ausgebildet ist. Der Lesekopf 1 weist statt einer Sensoreinheit 4 mit zwei Erfassungsbezugspunkten R1, R2 zweier Sensoren 6 eine Lese-Schreibeinheit 4' mit wenigstens einem Erfassungsbezugspunkt R1 eines Sensors 6 auf und einer Schreibeinheit 30 mit einem Schreibbezugspunkt R2', welche so angeordnet sind, dass sich der Schreibbezugspunkt R2' in Bewegungsrichtung 2a des Lesekopfes 1 vorlaufend in einem Schreib-Lese-Abstand s' zum Erfassungsbezugspunkt R1 befindet. Der Schreib-Lese-Abstand s' ist durch ein Substrat 5 aus einem form- und alterungsstabilen Material der oben beschriebenen Art hochpräzise festgelegt. Alternativ oder zusätzlich ist der Schreib-Lese-Abstand s' durch ein herstellerseitiges Vermessen oder durch ein Vermessen mit einer Präzisionsmesseinrichtung des Lesekopfs 1 (in Fig. 2d nicht dargestellt), wie sie beispielsweise anhand der Figur 2b erläutert wurde, hochpräzise in seiner Länge bestimmt.

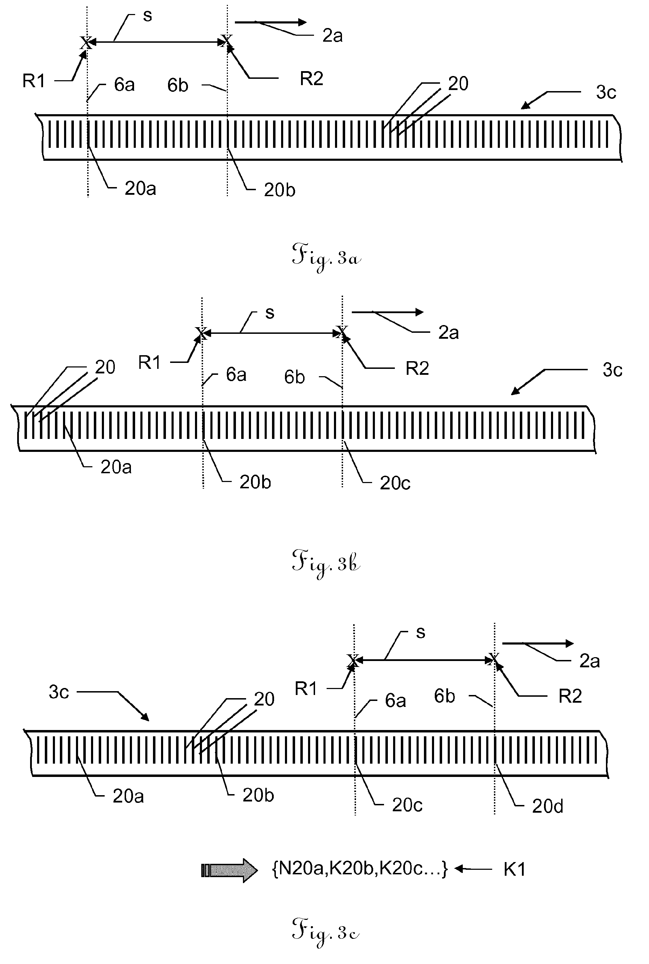

Die Figuren 3a bis 3d stellen das erfindungsgemässe Kalibrierverfahren mit Bilden eines ersten Kalibrierkamms K1 für einen erfindungsgemässen Lineargeber 100 dar. Die Sensoreinheit des Lineargebers ist angedeutet durch seine, in diesem Beispiel zwei, Erfassungsbezugspunkte R1 und R2, durch deren fixen Erfassungsabstand wiederum das Eichmass s definiert ist, welches - wie oben beschrieben - hochpräzise bekannt ist.

Im Rahmen des Kalibrierverfahrens wird in einem ersten Schritt (Fig. 3a) der Lesekopf 1 relativ zur Codeelemente 20 aufweisenden Positionscodemarkierung 3c einer Massverkörperung 3 so positioniert, dass ein erstes Codeelement 20 als Startcodeelement 20a in Bezug zum ersten, nachlaufenden Erfassungsbezugspunkt R1 erfasst wird (durch die Linie 6a angedeutet).

Als Startcodeelement 20a kann jedes Codeelement 20 dienen. Im gleichen Schritt wird in Bezug zum zweiten, vorlaufenden Erfassungsbezugspunkt R2 ein zweites Codeelement 20b erfasst (durch die Linie 6b angedeutet).

In einem zweiten Schritt (Fig. 3b) wird der Lesekopf soweit entlang der Positionscodemarkierung 3c in Richtung 2a verschoben, bis das zweite Codeelement 20b in Relation zum ersten nachlaufenden Erfassungsbezugspunkt R1 erfassbar ist. Mit anderen Worten wird der Lesekopf etwa um ein Eichmass entlang der Achse der Massverkörperung verschoben. In einem weiteren, dritten Schritt werden das zweite Codeelement 20b in Relation zum ersten Erfassungsbezugspunkt R1 und zudem ein weiteres Codeelement 20c in Bezug zum zweiten vorlaufenden Erfassungsbezugspunkt R2 erfasst.

Der zweite und der dritte Schritt werden analog wiederholt, so dass das weitere Codeelement 20c in Bezug zum ersten Erfassungsbezugspunkt R1 und ein nächstes Codeelement 20d in Bezug zum zweiten Erfassungsbezugspunkt R2 erfasst werden (Fig. 3c). Dies wird für weitere Bereiche der Positionscodemarkierung 3c fortgeführt, wodurch Daten für einen ersten Kalibrierkamm K1 erfasst sind. Insbesondere können die Schritte zwei und drei solange wiederholt werden, bis das Ende der Positionscodemarkierung 3c erreicht ist.

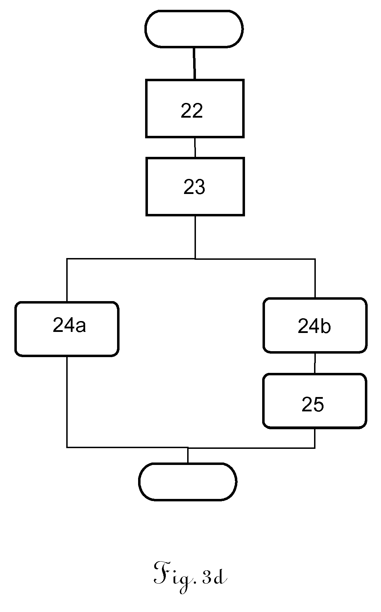

Für die erfassten Codeelemente des ersten Kalibrierkamms K1 werden im Rahmen des Kalibrierverfahrens kalibrierte Positionswerte bestimmt. Das erfindungsgemässe Bestimmen von kalibrierten Positionswerten im Rahmen des Kalibrierverfahrens wird anhand der Fig. 3d näher beschrieben.

In einem Schritt 22 (Fig. 3d) wird eine Startpositionswert N20a für das Startcodeelement 20a bestimmt, beispielsweise anhand eines in der Steuer- und Auswerteeinheit hinterlegten Sollpositionswerts oder indem der Startpositionswert als Nullpunkt der Positionscodemarkierung festgesetzt wird.

Ausgehend vom Startpositionswert des Startcodeelements 20a werden im Schritt 23 für die weiteren erfassten Codeelemente rechnerische Positionswerte wie folgt berechnet: Für das zweite Codeelement 20b erfolgt dies dadurch, dass zum Startpositionswert des Startcodeelements 20a ein Eichmass s addiert wird, da der Abstand zwischen den beiden Codeelementen 20a und 20b auf der Positionscodemarkierung 3c einem Eichmass s entspricht. Für die Positionswertberechnung des weiteren Codeelements 20c werden zum Startpositionswert des Startcodeelements zwei Eichmasse s addiert, da der Abstand zwischen den beiden Codeelementen 20a und 20c auf der Positionscodemarkierung 3c zwei Eichmassen s entspricht. Alternativ kann zum rechnerischen Positionswert des Codeelements 20b ein Eichmass s addiert werden. Ein Berechnen eines rechnerischen Positionswerts für das Codeelement 20d erfolgt demgemäss mittels Addition dreier Eichmasse s zum Startpositionswert des Startcodeelements 20a bzw. durch Addieren eines weiteren Eichmasses s zum rechnerischen Positionswert des Codeelements 20c. Dieser Vorgang wird entsprechend für die weiteren erfassten Codeelemente fortgesetzt. Ein Verschieben des Lesekopfs 1 kann auch in Richtung kleiner werdender Positionswerte erfolgen. Dann erfolgt eine Addition von Eichmassen s mit negativem Vorzeichen.

Anschliessend an Schritt 23 können erfindungsgemäss in einem Schritt 24a die nach Schritt 23 berechneten rechnerischen Positionswerte als kalibrierte Positionswerte in der Speichereinheit der Steuer- und Auswerteeinheit hinterlegt werden. Auch kann ein Bestimmen von kalibrierten Positionswerten auf Grundlage der rechnerischen Positionswerte dergestalt erfolgen, dass anhand der rechnerischen Positionswerte eine Kalibrierfunktion erzeugt wird, welche die rechnerischen Positionswerte mathematisch beschreibt. Die einzelnen kalibrierten Positionswerte werden dann anhand der Kalibrierfunktion erstellt und hinterlegt. Eine Kalibrierfunktion kann für den gesamten erfassten Bereich der Positionscodemarkierung erzeugt werden oder auch abschnittsweise, wobei für jeden Abschnitt eine eigene Kalibrierfunktion erzeugt werden kann. Lagen bereits in der Steuer- und Auswerteeinheit 2 den Codeelementen zugeordneten Sollpositionswerte vor, werden diese durch die kalibrierten Positionswerte ersetzt.

Wird der Lineargeber 100 anschliessend zur Vermessung eines Objekts oder einer Verschiebung verwendet, werden zur Bestimmung eines Positionswerts die kalibrierten Positionswerte herangezogen, welche den Codeelementen durch das Kalibrierverfahren zugeordnet sind.

Lagen bereits in der Steuer- und Auswerteeinheit den Codeelementen zugeordneten Sollpositionswerte vor, kann alternativ zu Schritt 24a in einem Schritt 24b ein Korrekturwert für den Sollpositionswert eines Codeelements bestimmt werden, indem der nach Schritt 23 berechnete rechnerische Positionswert mit dem entsprechenden Sollpositionswert verglichen und eine Abweichung der beiden voneinander bestimmt wird. Insbesondere wird eine Differenz aus dem rechnerischen Positionswert und dem Sollpositionswert berechnet, deren Wert den Korrekturwert bildet.

Im Schritt 25 wird ein solcher Korrekturwert dem entsprechenden Codeelement zugeordnet und in der Speichereinheit hinterlegt. Die Kombination aus Sollpositionswert und Korrekturwert bildet dann den kalibrierten Positionswert, welcher im Rahmen einer anschliessenden Wegmessung zur Positionsbestimmung herangezogen wird.

Ist das Eichmass s nicht, z.B. durch eine herstellerseitige Vermessung, hochpräzise bekannt, erfolgt im Zuge des Kalibrierverfahrens ein hochpräzises Bestimmen des Eichmasses s, im Beispiel mittels opto-elektronischem, Vermessen durch die Präzisionsmessvorrichtung 10. Dies ist besonders vorteilhaft bei einem Lineargeber 100 nach Fig. 2b, welcher ein Substrat 5 aufweist, das weniger thermisch stabile und alterungsbeständig ist.

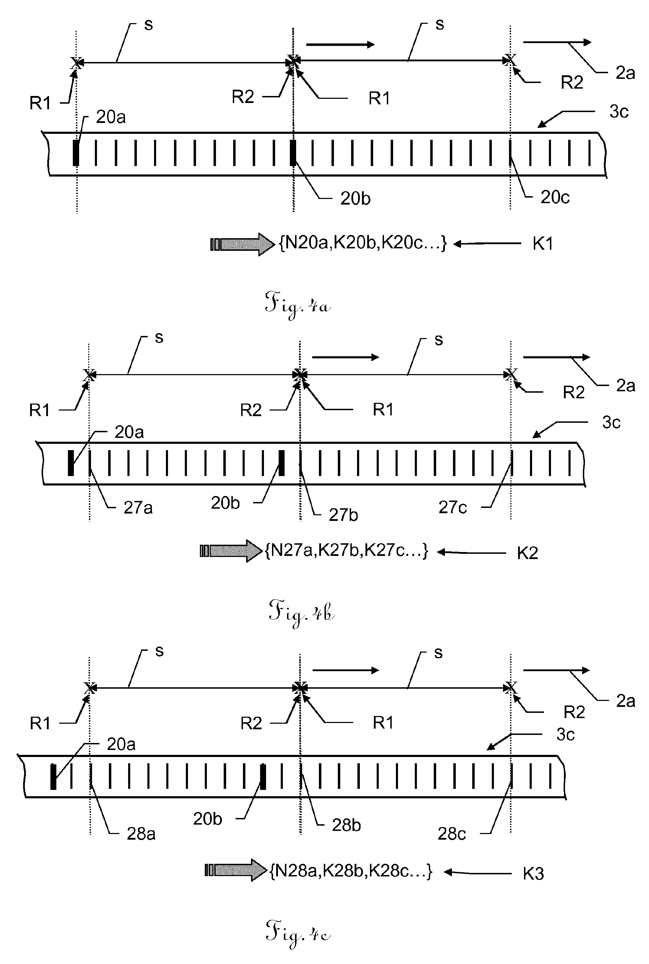

Anhand der Fig. 4a bis 4c wird für eine erfindungsgemässe Fortbildung des Kalibrierverfahrens das Bilden mehrerer Kalibrierkämme K1 bis K3 beschrieben.

Fig. 4a entspricht einer Zusammenführung der beiden Fig. 3a und 3b. (Die Codeelemente 20a und 20b sind lediglich zur besseren Erkennung dicker als die restlichen Codeelemente gezeichnet). Der Lesekopf ist in einem erste Schritt (in Fig. 4a links dargestellt) so positioniert, dass ein erstes Startcodeelement 20a in Bezug zum nachlaufenden Erfassungsbezugspunkt R1 erfassbar ist. Dieses wird im nächsten Schritt in Bezug zum nachlaufenden Erfassungsbezugspunkt R1 erfasst, ebenso ein zweites Codeelement 20b in Bezug zum vorlaufenden Erfassungsbezugspunkt R2. Diese Schritte werden mit dem Erfassen weiterer Codeelemente (in Fig. 4a rechts dargestellt), wie dies bzgl. Fig. 3a bis 3c beschrieben ist, fortgeführt. Auf diese Weise wird die Grundlage für einen ersten Kalibrierkamm K1 gelegt, über welchen letztlich die kalibrierten Positionswerte den Codeelementen 20a, 20b, 20c usw. zugeordnet sind.

In Fig. 4b ist der Lesekopf nun so positioniert, dass ein zum ersten Startcodeelement 20a benachbartes Codeelement als zweites Startcodeelement 27a in Bezug zum nachlaufenden Erfassungsbezugspunkt R1 erfassbar ist. Das Codeelement 27a dient nun als Startcodeelement zur Erstellung eines zweiten Kalibrierkamms K2, indem die Verfahrensschritte in gleicher Weise wiederholt werden, wie dies bzgl. Fig. 3a bis 3d bzw. wie bzgl. Fig. 4a beschrieben worden ist. In Fig. 4b wird also das Codeelement 27a in Bezug zum nachlaufenden Erfassungsbezugspunkt R1 erfasst und im gleichen Schritt ein weiteres Codeelement 27b in Bezug zum vorlaufenden Erfassungsbezugspunkt R2 usw.

Ein weiterer, dritter Kalibrierkamm K3 wird erstellt, indem ein weiteres Codeelement 28a als Startcodeelement zur Durchführung der Verfahrensschritte nach Fig. 3a bis 3d herangezogen wird (Fig. 4c).

Weitere Kalibrierkämme können erfindungsgemäss in analoger Weise gebildet werden. Um Mehrfacherfassungen von Codeelementen zu vermeiden, werden als Startcodeelemente lediglich solche Codeelemente herangezogen, die sich innerhalb eines Eichmasses auf der Massverkörperung befinden. Im Beispiel nach Fig. 4a sind dies die elf Codeelemente, die zwischen den Codeelementen 20a und 20b liegen, das Codeelement 20a eingeschlossen, das Codeelement 20b ausgeschlossen. Es kann eine Anzahl an Kalibrierkämmen gebildet werden, die der Anzahl aller Codeelemente innerhalb eines Eichmasses entspricht. Bezogen auf die Fig. 4a bis 4c also beispielsweise die Anzahl elf aus den Kalibrierkämmen K1 bis K11. Erfindungsgemäss können auch weniger Kalibrierkämme erstellt werden, und beispielsweise nur alle zweiten Codeelemente oder eine sonstige Auswahl aus den Codeelementen innerhalb eines Eichmasses s als Startcodeelemente benutzt werden.

Die verschiedenen Kalibrierkämme können nacheinander erstellt werden wie für Fig. 4a bis 4c beschrieben. Ein Erstellen kann alternativ auch parallel erfolgen, indem der Lesekopf zum nächsten zu erfassenden Codeelement verschoben wird, unabhängig davon, zu welchem Kalibrierkamm es zugehörig ist. Es werden also zuerst sukzessive alle Startcodeelemente und alle weiteren, erfassbaren zweiten Codeelemente erfasst, bevor die Codeelemente erfasst werden, die zwei Eichmasse s vom jeweiligen Startcodeelement beabstandet sind, usw. Mit anderen Worten erfolgt ein Verschieben des Lesekopfs 1 erst, nachdem "alle" Codeelemente im Bereich des Eichmasses als Startcodeelemente erfasst sind. Eine Zuordnung eines erfassten Codeelements zum zugehörigen Korrekturkamm erfolgt durch die Steuer- und Auswerteeinheit 2.

Für einen Lineargeber 100 nach Fig. 2c mit mehr als zwei Erfassungsbezugspunkten, welche mehrere Erfassungsabstände festlegen, können in analoger Weise ebenfalls mehrere Kalibrierkämme erstellt werden, die beispielsweise auf unterschiedlichen Eichmassen s basieren. Dadurch können noch präziser kalibrierte Positionswerte bestimmt werden und das Verfahren kann robuster gemacht und/oder mit geringerem Zeitaufwand durchgeführt werden. Durch Mittelwertbilden redundant erfasster Codierung lassen sich nicht-systematische Fehler beim Bestimmen von Positionswerten eliminieren.

Für einen Lineargeber 100 mit einer Sensoreinheit 4, welche wenigstens zwei Erfassungsbereiche A1 und A2 mit je einem Erfassungsbezugspunkt R1 und R2 aufweist (siehe Fig. 2b oder 2c), kann in einer weiteren Fortbildung des erfindungsgemässen Kalibrierverfahrens ein Vermessen von Abständen auf einer Positionscodemarkierung 3c von benachbarten Codeelementen 20 erfolgen. Ein Codeelementabstand zwischen zwei Codeelementen 20 kann z.B. anhand des Abstands der Schwerpunkte der beim Erfassen durch sie von der Sensoreinheit generierten Zustandssignale bestimmt werden.

Erfolgt das Erfassen von Codeelementen beispielsweise opto-elektronisch mit einem Auflichtverfahren, so erzeugt das von zwei Codeelementen reflektierte Licht auf einem positionssensitiven Detektor zwei voneinander beabstandete Helligkeitspeaks. Der Abstand dieser zwei Helligkeitspeaks kann zur Berechnung des Codeelementabstands dieser zwei Codeelemente herangezogen werden.

Dem Fachmann sind alternativ zur Schwerpunktsbestimmung auch andere Methoden bekannt, mittels welcher die genaue Position von Codeelementen auf der Positionscodemarkierung 3c und damit eines Abstands dieser Codeelemente ermittelt werden kann. Auch können Codeelementabstände "indirekt" mittels Bilden einer Differenz aus den Abständen der betreffenden Codeelemente zu einem gemeinsamen Bezugscodeelement bestimmt werden. Ein solches gemeinsames Bezugscodeelement kann z.B. das Codeelement 20a sein. Soll beispielsweise der Abstand der beiden Codeelemente 27a und 28a zueinander bestimmt werden, werden zuerst die jeweiligen Abstände des Codeelements 27a und 28a zum Bezugscodeelement 20a bestimmt. Der gesuchte Abstand zwischen den beiden Codeelementen 27a und 28a ist der Wert der Differenz aus den jeweiligen Abständen der Codeelemente zum Bezugscodeelement.

Zur Erzielung von höheren Genauigkeiten können bei einer opto-elektronischen Erfassung der Codeelemente einer Positionscodemarkierung die nicht idealen Eigenschaften von realen Abbildungssystemen, die in Verzerrungen des Bildes resultieren, durch eine Verzeichnungskorrektur kompensiert werden. Alle Abbildungseigenschaften von Projektor und Detektor können dabei im Rahmen von dem Fachmann bekannten Kalibrierungsprozessen (z.B. einer Serie von Kalibrieraufnahmen) gemessen und daraus ein mathematisches Modell zur Beschreibung dieser Abbildungseigenschaften generiert werden.

In Fig. 5 ist dargestellt, wie ein derartiges Bestimmen der genauen Position eines Codeelements ausserdem dazu verwendet wird, um den Bezug zu einem Erfassungsbezugspunkt herzustellen. In Fig.5 befindet sich das Codeelement 39a nicht auf der Projektionslinie 6b, die durch den Erfassungsbezugspunkt R2 verläuft, sondern in einem Abstand Δ3 dazu. Dadurch soll angedeutet werden, dass sich abhängig vom Eichmass s und der Anordnung der Codeelemente 20 auf der Positionscodemarkierung 3c ein Codeelement 20 nicht unmittelbar "an" einem Erfassungsbezugspunkt R1 oder R2 befinden muss, um in Bezug zu diesem erfasst werden zu können. Beispielsweise muss zu einer opto-elektronischen Erfassung des Codeelements 39a in Bezug zum Erfassungsbezugspunkt R2 im Auflichtverfahren sich der Helligkeitspeak des Codeelements 39a nicht im Nullpunkt des Erfassungsbereichs A2 des Photodetektors befinden, sondern kann in einer gewissen Distanz dazu detektiert werden. Durch Bestimmen dieser Distanz kann der Bezug zum Nullpunkt und damit des Codeelements 39a zum Erfassungsbezugspunkt R2 hergestellt werden.

Eine derartige Herstellung eines Bezugs zu einem Erfassungsbezugspunkt kann auch für ein alternatives Vorgehen bei der Verschiebung des Lesekopfs zur Erstellung eines Kalibrierkamms verwendet werden. Anstatt den Lesekopf so zu verschieben, dass die gleiche Stelle der Positionscodemarkierung 3c sich in gleicher Positionsrelation zum Erfassungsbezugspunkt R1 befindet wie zuvor zum Erfassungsbezugspunkt R2 (vgl. Fig. 3b und 3c), kann der Lesekopf so verschoben werden, dass ein Codeelement 20 erfasst wird, dessen Versatz zum vorlaufenden Erfassungsbezugspunkt R2 mittels einer Abstandsmessung bekannt ist. In Fig. 5 ist dies beispielsweise das Codeelement 40b, dessen Distanz Δ4 zum Erfassungsbezugspunkt R2 bestimmt ist oder das Codeelement 39a, dessen Distanz Δ3 zum Erfassungsbezugspunkt R2 ebenfalls bestimmt ist. Dementsprechend beträgt der Abstand von erfassten Codeelementen 20, z.B. des Codeelements 39a, zum Startcodeelement 20a nicht genau ein ganzzahliges Vielfaches, sondern der Abstand ist um die jeweilige Distanz zum Erfassungsbezugspunkt vermindert oder erhöht, im Falle des Codeelements 39a beispielsweise um den Wert Δ3. Demgemäss wird bei der Ermittlung eines rechnerischen Positionswerts nicht ein volles Eichmass s oder Vielfaches davon addiert, sondern ein um die Distanz zum Erfassungsbezugspunkt verminderte oder erhöhte Länge.

Fig. 5 zeigt weiter ein Bestimmen von Codeelementabständen für die Startcodeelemente 20a, 27a, 28a mehrerer Kalibrierkämme. Alle vierzehn Codeelemente, die sich in diesem Beispiel innerhalb des Eichmasses s befinden, werden als Startcodeelemente herangezogen, so dass die Kalibrierkämme K1 bis K14 entstehen. Der Abstand zwischen den Startcodeelementen 20a und 27a ist Δ1, der Abstand zwischen den Startcodeelementen 27a und 28a ist Δ2. Für die weiteren Startcodeelemente innerhalb des Eichmasses s wird ebenfalls der Abstand bestimmt. Anhand dieser gemessenen Startcodeelementabstände können die Startcodeelemente in einen Positionsbezug zueinander gestellt werden, wodurch ein Verknüpfen der verschiedenen Kalibrierkämme K1 bis K14 durch eine Ausgleichsrechnung erfolgen kann. Statt über die Abstände der Startcodeelemente zueinander kann in entsprechender Weise auch ein Verknüpfen von Kalibrierkämmen durch Bestimmen der Abstände von anderen Codeelementen innerhalb eines Eichmasses s erfolgen, welche zumindest nicht alle als Startcodeelemente dienen.

Zur weiteren Erhöhung der Kalibriergenauigkeit können erfindungsgemäss kalibrierte Positionswerte für die Startcodeelemente anhand der gemessenen Abstände zueinander bestimmt werden. Die Summe der Abstände der Codeelemente 20 zueinander innerhalb eines Eichmasses s entspricht idealerweise dem Eichmass s. Im Beispiel nach Fig. 5 sind dies die Abstände Δ1, Δ2 usw. der Startcodeelemente 20a, 27a usw. bis zum Startcodeelement 39a und dessen Abstand Δ3 zum Erfassungsbezugspunkt R2. Diese Abstandssumme wird mit dem Eichmass s verglichen und eine Abweichung bestimmt. Gibt es keine Abweichung oder liegt diese unterhalb eines festgesetzten Schwellwerts, ist die Abweichung Null. Die Abweichung wird als Grundlage für das Bestimmen von kalibrierten Positionswerten für die Startcodeelemente herangezogen. Diese kalibrierten Positionswerte werden dann analog zu den Schritten 24a bzw. 24b und 25 aus Fig. 3d in der Speichereinheit hinterlegt. Wird innerhalb eines Eichmasses s nur ein einziger Startcodeelementabstand bestimmt, beispielsweise der des Startcodeelements 20a zum Startcodeelement 39a, dann wird entsprechend der eine Startcodeelementabstand mit dem Eichmass s verglichen (im Beispiel unter Berücksichtigung des Abstands Δ3) und hierüber eine Abweichung bestimmt. Zur Ermittlung der kalibrierten Positionswerte kann beispielsweise die Abweichung der Abstandssumme zum Eichmass s hinsichtlich der Anzahl der Startcodeelemente gemittelt werden, im Beispiel also durch vierzehn geteilt werden und damit ein gleicher kalibrierter Positionswert für alle Start-codeelemente verwendet werden. Insbesondere können die Schritte zum Bilden von Kalibrierkämmen und deren Verknüpfung und die Schritte zum Bilden von kalibrierten Positionswerten der Startcodeelemente Bestandteil eines einzigen, gemeinsamen Kalibrieralgorithmus sein, so dass aus den Messwerten der Kalibrierkämme und der Codeelementabstände in einer Zusammenschau rechnerische Positionswerte gebildet werden. Das Bestimmen einer Abweichung aus einer Abstandssumme und dem Eichmass s kann auch an beliebiger Stelle der Massverkörperung 3 erfolgen. Insbesondere kann das Bestimmen einer Abweichung im Rahmen eines Messlaufs des Lineargebers 100 erfolgen und als Mass für die Qualität der dabei gemessenen Positionswerte herangezogen werden. Überschreitet die Abweichung hierbei ein bestimmtes Mass, wird die Qualität oder Güte der Positionswerte als nicht mehr ausreichend angesehen und es kann eine Warnung bzw. Kalibrierempfehlung an den Benutzer ausgegeben werden und/oder eine Kalibrierung automatisch vom Lineargeber 100 durchgeführt werden.

Insbesondere bei ungleichen Abständen der Codeelemente zueinander, wie in Fig. 5 dargestellt, kann alternativ eine Gewichtung hinsichtlich eines einzelnen Codeelementabstandes erfolgen, und für jedes Startcodeelement ein solchermassen gewichteter kalibrierter Positionswert ermittelt werden.

Erfindungsgemäss ist es nicht notwendig, für eine Kalibrierung des Positionscodes 3c alle Codeelemente 20 auf der Positionscodemarkierung 3c oder innerhalb eines Bereichs derselben zu erfassen. Eine Bestimmung von Abständen von Codeelementen kann in einer Fortbildung des Kalibrierverfahrens genutzt werden, um kalibrierte Positionswerte für solche Codeelemente 20 zu bestimmen und zu hinterlegen, die bei einer Kammbildung nicht erfasst worden sind. Ist beispielsweise ein kalibrierter Positionswert für das erfasste Codeelement 39a bestimmt worden (Schritt 24a in Fig. 3d), kann ein rechnerischer Positionswert für das in bekanntem Abstand dazu benachbarte Codeelement 40b berechnet werden, indem der Abstand zum kalibrierten Positionswert addiert wird. Alternativ dazu können durch dem Fachmann bekannte Interpolationsmethoden oder durch Bilden einer oder mehrerer Ausgleichsfunktionen kalibrierte Positionswerte für nicht erfasste Codeelemente aus den vorhandenen kalibrierten Positionswerten erfasster Codeelemente bestimmt werden.

Die Figuren 6a-c stellen eine Fortbildung des Kalibrierverfahrens dar, in welcher Codeelemente 20 auf die Massverkörperung 3 durch den Lesekopf 1 nach einer Ausführungsform, wie sie beispielhaft in Fig. 2d dargestellt ist, kalibriert geschrieben werden. Die Massverkörperung 3 weist vorab lediglich eine Gruppe G von Startcodeelementen auf, welche bereits herstellerseitig kalibriert oder durch das erfindungsgemässe Verfahren kalibrierbar sind. Der Lesekopf 1 weist eine Lese-Schreibeinheit 4' mit wenigstens einem Erfassungsbezugspunkt R1 eines Sensors 6 auf und weiter eine Schreibeinheit 30 mit einem Schreibbezugspunkt R2', welche so angeordnet sind, dass sich der Schreibbezugspunkt R2' in Bewegungsrichtung 2a des Lesekopfes 1 vorlaufend in einem Schreib-Lese-Abstand s' zum Erfassungsbezugspunkt R1 befindet. Der Schreib-Lese-Abstand s' ist durch ein Substrat 5 aus einem form- und alterungsstabilen Material hochpräzise festgelegt. Alternativ oder zusätzlich ist der Schreib-Lese-Abstand s' durch ein herstellerseitiges Vermessen oder durch ein Vermessen mit einer Präzisionsmesseinrichtung des Lesekopfs 1 (in Fig. 2d nicht dargestellt) hochpräzise in seiner Länge bestimmt.

In einem ersten Schritt wird der Lesekopf 1 so relativ zur Massverkörperung 3 positioniert, dass ein erstes Startcodeelement 20a der Gruppe G relativ zum Erfassungsbezugspunkt R1 des Sensors 6 erfasst wird. In dieser ersten Startposition wird durch die Schreibeinheit 30, welche sich im hochpräzise bestimmten bzw. festgelegten Schreib-Lese-Abstand s' zum Sensor 6 befindet, ein erstes Codeelement 20b' geschrieben. Analog zur Vorgehensweise nach den Fig. 3a-c bzw. Fig. 4a-c ist durch das Eichmass aus dem hochpräzisen Schreib-Lese-Abstand s' der Abstand der beiden Codeelemente 20a und 20b' zueinander hochpräzise festgelegt. Ist zusätzlich das Eichmass in seiner Länge bekannt, so ist damit bei bekannter Position des ersten Startcodeelements 20a (welche als Nullposition festgelegt sein kann) beispielsweise die Position des Codeelements 20b' ebenfalls hochpräzise bekannt, indem der Schreib-Lese-Abstand s' zur Position des ersten Startcodeelements 20a addiert und in der Steuer- und Auswerteeinheit 2 hinterlegt wird.

In Fig. 6b ist der Lesekopf 1 nun so in Richtung 2a verschoben worden, dass ein zum ersten Startcodeelement 20a benachbartes Codeelement als zweites Startcodeelement 27a in Bezug zum Erfassungsbezugspunkt R1 vom Sensor 6 erfassbar ist. Das zweite Startcodeelement 27a dient nun als Ausgangspunkt für das Schreiben eines zweiten Codeelements 27b', indem die Verfahrensschritte in gleicher Weise wiederholt werden, wie dies bzgl. Fig.6a beschrieben ist. Analog zum ersten Startcodeelement 20a und dem ersten Codeelement 20b' aus Fig. 6a ist der Abstand des zweiten Codeelements 27b' zum zweiten Startcodeelement 27a' durch den Schreib-Lese-Abstand s', welcher das Eichmass definiert, hochpräzise bekannt bzw. bestimmbar.

Fig. 6c stellt den anschliessenden Schritt dar, bei dem analog zum vorherigen Schritt der Lesekopf 1 relativ zur Massverkörperung 3 in die Bewegungsrichtung 2a soweit verschoben wird, bis ein drittes Startcodeelement 28a durch die Sensoreinheit 4 gelesen werden kann. In dieser dritten Relativposition wird durch die Schreibeinheit 30 ein drittes Codeelement 28b' auf die Massverkörperung 3 geschrieben, dessen Position anhand des hochpräzisen Schreib-Lese-Abstands s' aus der Position des dritten Startcodeelements 28a berechenbar und hinterlegbar ist.

In analoger Vorgehensweise werden durch den Lesekopf 1 auf der Massverkörperung 3 weitere Codeelemente 20 jeweils im Abstand s' zu den Startcodeelementen der Gruppe G geschrieben. Sind durch ein entsprechend weites Verschieben des Lesekopfs 1 alle Startcodeelemente der Gruppe G durch den Sensor 6 erfasst, wird das Verfahren fortgesetzt, indem der Lesekopf 1 weiter entlang der Bewegungsrichtung 2a verschoben wird, so dass die zuvor erfindungsgemäss geschriebenen Codeelemente 20b', 27b', 28b' usw. relativ zum Erfassungsbezugspunkt R1 erfasst werden und in diesen jeweiligen Positionierungen durch die Schreibeinheit 30 weitere Positionscodeelemente 20 geschrieben werden. Es dienen im weiteren Verlauf des Verfahrens also durch die Schreibeinheit 30 kalibriert erzeugte Codeelemente 20 als Ausgangspunkt für weitere zu schreibende Codeelemente 20. Insbesondere können die Verfahrensschritte solange wiederholt werden, bis das Ende der Massverkörperung 3 erreicht ist. Eine derart geschriebene Positionscodemarkierung 3c bildet einen Positionscode, der aufgrund des hochpräzise festgelegten und vorteilhafterweise auch in seiner Länge hochpräzise bestimmten Schreib-Lese-Abstandes s' zwischen Erfassungsbezugspunkt und Schreibbezugspunkt bereits beim Schreiben der Codeelemente 20 kalibriert ist.

**Patentansprüche**

1. Lineargeber (100), mit

   ▪ einer Steuer- und Auswerteeinheit (2) mit Speichereinheit und Kalibrierfunktionalität,
   ▪ einer eine Positionscodemarkierung (3c) aus Codeelementen (20) aufweisenden Massverkörperung (3),
   ▪ einem Lesekopf (1) mit einer Sensoreinheit (4), wobei Lesekopf (1) und Massverkörperung (3) relativ zueinander bewegbar sind, und wobei

     o die Sensoreinheit (4) wenigstens einen ersten, nachlaufenden Erfassungsbezugspunkt (R1), und wenigstens einen zweiten, vorlaufenden, Erfassungsbezugspunkt (R2) aufweist, welche mittels eines Substrats (5) beabstandet voneinander fixiert sind, wodurch jeweils zwischen zwei Erfassungsbezugspunkten (R1, R2) ein Erfassungsabstand festgelegt ist,
     o mittels der Sensoreinheit (4) in einem Schritt wenigstens zwei Codeelemente (20a-d, 27a-c, 28a-c) erfassbar sind, was heisst, dass ein Erfassen bei einer unveränderten Relativpositionierung des Lesekopfs (1) zur Massverkörperung (3) so durchführbar ist, dass wenigstens ein Codeelement (20a-d, 27a-c, 28a-c) in Bezug zum ersten Erfassungsbezugspunkt (R1) und wenigstens ein Codeelement (20a-d, 27a-c, 28a-c) in Bezug zum zweiten Erfassungsbezugspunkt (R2) erfasst wird,

   ▪ mit Hilfe der Kalibrierfunktionalität eine Kalibrierung der Positionscodemarkierung (3c) mittels des Lesekopfs (1) unter Verwendung des wenigstens einen Erfassungsabstands durchführbar ist,

**dadurch gekennzeichnet, dass**

   ▪ das Substrat (5) aus einem form- und alterungsbeständigen Material mit einem linearen thermischen Ausdehnungskoeffizienten mit einem Betrag im Bereich von 0 bis höchstens $5 \cdot 10^{-6} \ K^{-1}$ gefertigt ist,
   ▪ wodurch der Lineargeber (100) zur hochpräzisen Kalibrierung mit wenigstens einem durch den wenigstens einen Erfassungsabstand definierten Eichmass (s) mit einem relativen Fehler im Bereich von höchstens $5 \cdot 10^{-6}$ versehen ist.

2. Lineargeber (100) nach Anspruch 1,
   **dadurch gekennzeichnet, dass**
   der Lesekopf (1) eine Präzisionsmesseinrichtung (10) zur hochpräzisen Bestimmung des wenigstens einen Erfassungsabstands mit einem relativen Fehler im Bereich von höchstens $5 \cdot 10^{-6}$ aufweist.

3. Lineargeber (100), mit

   ▪ einer Steuer- und Auswerteeinheit (2) mit Speichereinheit und Kalibrierfunktionalität,
   ▪ einer eine Positionscodemarkierung (3c) aus Codeelementen (20) aufweisenden Massverkörperung (3),
   ▪ einem Lesekopf (1) mit einer Sensoreinheit (4), wobei Lesekopf (1) und Massverkörperung (3) relativ zueinander bewegbar sind, und wobei

     o die Sensoreinheit (4) wenigstens einen ersten, nachlaufenden Erfassungsbezugspunkt (R1), und wenigstens einen zweiten, vorlaufenden, Erfassungsbezugspunkt (R2) aufweist, welche mittels eines Substrats (5) beabstandet voneinander fixiert sind, wodurch jeweils zwischen zwei Erfassungsbezugspunkten (R1, R2) ein Erfassungsabstand festgelegt ist,
     o mittels der Sensoreinheit (4) in einem Schritt wenigstens zwei Codeelemente (20a-d, 27a-c, 28a-c) erfassbar sind, was heisst, dass ein Erfassen bei einer unveränderten Relativpositionierung des Lesekopfs (1) zur Massverkörperung (3) so durchführbar ist, dass wenigstens ein Codeelement (20a-d, 27a-c, 28a-c) in Bezug zum ersten Erfassungsbezugspunkt (R1) und wenigstens ein Codeelement (20a-d, 27a-c, 28a-c) in Bezug zum zweiten Erfassungsbezugspunkt (R2) erfasst wird.

- ▪ mit Hilfe der Kalibrierfunktionalität eine Kalibrierung der Positionscodemarkierung (3c) mittels des Lesekopfs (1) unter Verwendung des wenigstens einen Erfassungsabstands durchführbar ist,

**dadurch gekennzeichnet, dass**

- ▪ der Lesekopf (1) eine Präzisionsmesseinrichtung (10) zur hochpräzisen Bestimmung des wenigstens einen Erfassungsabstands mit einem relativen Fehler im Bereich von höchstens $5 \cdot 10^{-6}$ aufweist,
- ▪ wodurch der Lineargeber (100) zur hochpräzisen Kalibrierung mit wenigstens einem durch den wenigstens einen Erfassungsabstand definierten Eichmass (s) mit einem relativen Fehler im Bereich von höchstens $5 \cdot 10^{-6}$ versehen ist.

4. Lineargeber (100) nach einem der vorhergehenden Ansprüche,
   **dadurch gekennzeichnet, dass**

- ▪ das Eichmass (s) wenigstens so viel grösser ist als der Abstand von Codeelementen (20) zueinander, dass sich innerhalb der Länge eines Eichmasses (s) jeweils mehrere, aber mindestens zwei Codeelemente (20) auf der Massverkörperung (3) befinden, und/oder
- ▪ die Sensoreinheit (4) wenigstens zwei Erfassungsbereiche (A1, A2) mit jeweils einem Erfassungsbezugspunkt (R1, R2) aufweist, wobei jeder Erfassungsbereich (A1, A2) zur Erfassung wenigstens zweier Codeelemente (39a, 40b, 20a, 27a, 28a)) in einem Schritt ausgelegt ist.

5. Lineargeber (100) nach einem der vorhergehenden Ansprüche,
   **dadurch gekennzeichnet, dass**
   die Sensoreinheit (4) einen

- ▪ Zeilensensor oder Flächensensor (6L) mit wenigstens zwei Erfassungsbereichen (A1, A2) mit je einem Erfassungsbezugspunkt (R1, R2) aufweist oder
- ▪ wenigstens zwei Einzelsensoren in Form von

   o Punktsensoren mit je einem Erfassungsbezugspunkt (R1, R2, R3)
   o und/oder Zeilen- und/oder Flächensensoren (6F1, 6F2, 6F3) mit je einem Erfassungsbereich (A1, A2, A3) mit je einem Erfassungsbezugspunkt (R1, R2, R3)

aufweist und die Steuer- und Auswerteeinheit (2) derart konfiguriert ist, dass von Codeelementen (20a, 27a, 28a, 39a, 40b), welche in einem Erfassungsbereich erfasst sind, die Distanzen ($\Delta$1-4) zueinander bestimmbar sind.

6. Lineargeber (100) nach einem der vorhergehenden Ansprüche,
   **dadurch gekennzeichnet, dass**
   bei Vorliegen einer Präzisionsmesseinrichtung (10) die hochpräzise Bestimmung des wenigstens einen Erfassungsabstands opto-elektronisch erfolgt, insbesondere wobei die Präzisionsmesseinrichtung (10) als Interferometer, im Speziellen als Laserinterferometer, ausgebildet ist.

7. Lineargeber (100) nach einem der vorhergehenden Ansprüche,
   **dadurch gekennzeichnet, dass**
   der Betrag des thermischen Ausdehnungskoeffizienten des Substratmaterials zumindest innerhalb eines Temperaturbereichs von 253K bis 343K, insbesondere zumindest innerhalb eines Temperaturbereichs von 283K bis 303K, im Bereich von 0 bis $1 \cdot 10^{-6}$ $K^{-1}$, insbesondere von 0 bis $6 \cdot 10^{-7}$ $K^{-1}$, liegt.

8. Lineargeber (100) nach einem der vorhergehenden Ansprüche,
   **dadurch gekennzeichnet, dass**
   die Sensoreinheit (4) wenigstens drei unterschiedlich beabstandete Erfassungsbezugspunkte (R1, R2, R3) aufweist, wodurch wenigstens zwei unterschiedlich grosse Eichmasse (s1, s2, s3) definiert sind, insbesondere wobei eines der wenigstens zwei Eichmasse (s1, s2, s3) ein erstes Eichmass und ein weiteres Eichmass ein zweites Eichmass ist und das zweite Eichmass kein ganzzahliges Vielfaches des ersten Eichmasses ist.

9. Lineargeber (100), mit

- ▪ einer Steuer- und Auswerteeinheit (2) mit Speichereinheit und Kalibrierfunktionalität,
- ▪ einer mit einer Positionscodemarkierung (3c) aus Codeelementen (20) beschreibbaren Massverkörperung (3),
- ▪ einem Lesekopf (1) mit einer Schreib-Lese-Einheit (4'), wobei Lesekopf (1) und Massverkörperung (3) relativ zueinander bewegbar sind, und wobei

   o die Schreib-Lese-Einheit (4') wenigstens einen ersten, nachlaufenden Erfassungsbezugspunkt (R1), und wenigstens einen zweiten, vorlaufenden, Schreibbezugspunkt (R3) aufweist, welche mittels eines Substrats (5) beabstandet voneinander fixiert sind, wodurch jeweils zwischen zwei Bezugspunkten (R1, R2') ein Schreib-Lese-Abstand (s') festgelegt ist,

o mittels der Schreib-Lese-Einheit (4') in einem Schritt wenigstens ein Codeelement (20a-d, 27a-c,28a-c) erfassbar ist und wenigstens ein Codeelement 20a-d, 27a-c, 28a-d) schreibbar ist, was heisst, dass ein Erfassen bei einer unveränderten Relativpositionierung des Lesekopfs (1) zur Massverkörperung (3) so durchführbar ist, dass wenigstens ein Codeelement (20a-d, 27a-c,

28a-c) in Bezug zum ersten, nachlaufenden Erfassungsbezugspunkt (R1) und wenigstens ein Codeelement (20a-d, 27a-c, 28a-c) in Bezug zum zweiten, vorlaufenden Schreibbezugspunkt (R3) geschrieben wird,

**dadurch gekennzeichnet, dass**

- das Substrat (5) aus einem form- und alterungsbeständigen Material mit einem linearen thermischen Ausdehnungskoeffizienten mit einem Betrag im Bereich von 0 bis höchstens $5·10^{-6}$ $K^{-1}$ gefertigt ist,

- wodurch der Lineargeber (100) zur hochpräzisen Kalibrierung mit wenigstens einem durch den wenigstens einen Schreib-Lese-Abstand (s') definierten Eichmass mit einem relativen Fehler im Bereich von höchstens $5·10^{-6}$ versehen ist, oder

- der Lesekopf (1) eine Präzisionsmesseinrichtung (10) zur hochpräzisen Bestimmung des wenigstens einen Schreib-Lese-Abstands mit einem relativen Fehler im Bereich von höchstens $5·10^{-6}$ aufweist,

- wodurch der Lineargeber (100) zur hochpräzisen Kalibrierung mit wenigstens einem durch den wenigstens einen Schreib-Lese-Abstand (s') definierten Eichmass mit einem relativen Fehler im Bereich von höchstens $5·10^{-6}$ versehen ist.

10. Kalibrierverfahren für einen Lineargeber (100) nach einem der Ansprüche 1 bis 8, bei dem ein erster Kalibrierkamm (K1) durch folgende Schritte gebildet wird:

a) in einer ersten Position des Lesekopfes (1) wird in Bezug zu einem nachlaufenden Erfassungsbezugspunkt (R1) ein erstes Codeelement als Startcodeelement (20a) erfasst und im gleichen Schritt wird in Bezug zu einem vorlaufenden Erfassungsbezugspunkt (R2) ein zweites Codeelement (20b) erfasst,

b) der Lesekopf (1) wird in eine zweite Position relativ zur Massverkörperung (3) soweit verschoben, bis das zweite Codeelement (20b) in Bezug zum nachlaufenden Erfassungsbezugspunkt (R1) erfassbar ist,

c) das zweite Codeelement (20b) wird in Bezug zum nachlaufenden Erfassungsbezugspunkt (R1) erfasst und im gleichen Schritt wird ein weiteres Codeelement (20c) in Bezug zum vorlaufenden Erfassungsbezugspunkt (R2) erfasst,

d) der Lesekopf (1) wird in weitere Positionen verschoben und die Schritte b und c werden wiederholt bis der Lesekopf (1) an einem gewünschten Punkt der Massverkörperung (3) oder am letzten auf diese Weise erfassbaren Codeelement (20) der Massverkörperung (3) angelangt ist,

**dadurch gekennzeichnet, dass**

e) im Laufe des Kalibrierverfahrens der Erfassungsabstand zwischen dem vorlaufenden Erfassungsbezugspunkt (R2) und dem nachlaufenden Erfassungsbezugspunkt (R1) als hochpräzises Eichmass (s, s1-s3) bestimmt wird,

f) mit Hilfe des so definierten Eichmasses (s, s1-s3) ein zu den erfassten Codeelementen (20a-c) rechnerische Positionswerte (K20b, K20c) berechnet werden und

g) basierend auf den rechnerischen Positionswerten (K20b, K20c) kalibrierte Positionswerte generiert und hinterlegt werden.

11. Kalibrierverfahren nach Anspruch 10 für einen Lineargeber (100), welcher eine Präzisionsmesseinrichtung (10) aufweist,
**dadurch gekennzeichnet, dass** das hochpräzise Bestimmen des Eichmasses (s, s1-s3) für ein jedes Kalibrieren, insbesondere opto-elektronisch, im Speziellen interferometrisch, erfolgt.

12. Kalibrierverfahren nach Anspruch 10 für einen Lineargeber (100), welcher ein Substrat (5) aus einem form- und alterungsbeständigen Material mit einem thermischen Ausdehnungskoeffizienten im Bereich von 0 bis höchstens $5·10^{-6}$ $K^{-1}$ aufweist,
**dadurch gekennzeichnet, dass** das hochpräzise Bestimmen des Eichmasses (s, s1-s3) vor der Endmontage des Lineargebers (100) erfolgt.

13. Kalibrierverfahren nach einem der Ansprüche 10 bis 12,
**dadurch gekennzeichnet, dass**

- die rechnerischen Positionswerte (K20b, K20c, K27b, K27c, K28b, K28c) anhand eines dem Startcodeelement (20a, 27a, 28a) zugeordneten Startpositionswerts (N20a, N27a, N28a) und anhand des Eichmasses (s, s1-s3) berechnet werden, insbesondere wobei zur Berechnung eines rechnerischen Positionswerts für das zweite Codeelement zu jenem Startpositionswert (N20a, N27a, N28a), der dem Startcodeelement (20a, 27a, 28a) zugeordnet ist, ein Eichmass (s, s1-s3) addiert wird, und für jeweils ein folgendes weiteres Codeelement des Kalibrierkamms jeweils ein weiteres Eichmass (s, s1-s3) addiert wird und/oderrechnerische Positionswerte (K20b, K20c, K27b, K27c, K28b, K28c) als kalibrierte Positionswerte hinterlegt werden, und/oder

■ anhand der rechnerischen Positionswerte (K20b, K20c, K27b, K27c, K28b, K28c) für wenigstens einen Abschnitt der Positionscodemarkierung, eine Kalibrierfunktion erzeugt wird, anhand derer kalibrierte Positionswerte bestimmt und hinterlegt werden, und/oder

■ bezüglich eines erfassten Codeelements die Differenz zwischen dem rechnerischen Positionswert (K20b, K20c, K27b, K27c, K28b, K28c) und einem in der Speichereinheit hinterlegten Sollpositionswert gebildet wird, wobei der Wert der Differenz als Korrekturwert hinterlegt wird und die Kombination aus Sollpositionswert und Korrekturwert als kalibrierter Positionswert dient.

14. Kalibrierverfahren nach einem der Ansprüche 10 bis 13,
**dadurch gekennzeichnet dass**
wenigstens ein weiterer Kalibrierkamm (K2, K3) gebildet wird und die Kalibrierkämme (K2, K3) miteinander verknüpft werden, wobei der wenigstens eine weitere Kalibrierkamm (K2, K3) durch Wiederholen der Verfahrensschritte des Anspruchs 7 ausgehend von einem weiteren als Startcodeelement (27a, 28a) zu erfassenden Codeelement gebildet wird, wobei sich das als Startcodeelement (27a, 28a) zu erfassenden Codeelement, wenn sich der Lesekopf (1) im ersten Kalibrierkamm (K1) in seiner ersten Position befindet, innerhalb eines Eichmasses (s, s1-s3) auf der Massverkörperung (3) befindet und zwar direkt benachbart zum ersten Startcodeelement (20a) oder durch andere Codeelemente getrennt, benachbart zum ersten Startcodeelement (20a).

15. Kalibrierverfahren nach einem der Ansprüche 10 bis 14,
**dadurch gekennzeichnet dass**
Codeelementabstände (∆1, ∆2) zwischen benachbarten Codeelementen gemessen werden und

■ die gemessenen Codeelementabständen (∆1, ∆2) verwendet werden, um die Kalibrierkämme (K1-3) miteinander zu verknüpfen, insbesondere durch eine Ausgleichsrechnung, und/oder
■ die gemessenen Codeelementabständen (∆1, ∆2) verwendet werden, um ausgehend von einem rechnerischen Positionswert eines Codeelements einen kalibrierten Positionswert für ein benachbartes Codeelement zu bestimmen.

16. Kalibrierverfahren nach Anspruch 15,
**dadurch gekennzeichnet, dass**
das Eichmass (s, s1-s3) während des Messbetriebs verwendet wird, um die Genauigkeit der Positionscodemarkierung (3c) zu überprüfen.

17. Kalibrierverfahren nach einem der Ansprüche 10 bis 16,
**gekennzeichnet durch**
ein opto-elektronisches oder kapazitiv-elektronisches Erfassen von Codeelementen (20) oder
ein magnetisch-elektronisches oder induktivelektronisches Erfassen von Codeelementen (20).

18. Kalibrierverfahren nach einem der Ansprüche 10 bis 17,
**gekennzeichnet durch**
ein Bestimmen von kalibrierten Positionswerten für wenigstens einige Codeelemente (20) anhand von wenigstens zwei Eichmassen (s, s1-s3), insbesondere anhand von wenigstens zwei unterschiedlichen Eichmassen (s, s1-s3), wobei im Speziellen eines der wenigstens zwei Eichmasse (s, s1-s3) ein erstes Eichmass und ein weiteres Eichmass ein zweites Eichmass ist und das zweite Eichmass kein ganzzahliges Vielfaches des ersten Eichmasses ist.

19. Computerprogrammprodukt, das auf einem maschinenlesbaren Träger gespeichert ist, mit Programmcode, zur Steuerung bzw. Durchführung des Verfahrens nach einem der Ansprüche 11 bis 18.

**Claims**

1. Linear encoder (100), having

■ a control and analysis unit (2) having storage unit and calibration functionality,
■ a mass embodiment (3) having a position code marking (3c) made of code elements (20),
■ a read head (1) having a sensor unit (4), wherein read head (1) and mass embodiment (3) are movable in relation to one another, and wherein

○ the sensor unit (4) has at least one first, trailing detection reference point (R1), and at least one second, leading detection reference point (R2), which are fixed spaced apart from one another by means of a substrate (5), wherein a detection distance is established in each case between two detection reference points (R1, R2),
○ at least two code elements (20a-d, 27a-c, 28a-c) are detectable in one step by means of the sensor unit (4), which means, that a detection with unchanged relative positioning of the read head (1) in relation to the mass embodiment (3) can be performed so that at least one code element (20a-d, 27a-c, 28a-c) is detected in relation to the first detection reference point (R1) and at least one code element (20a-d, 27a-c, 28a-c) is detected in relation to the second detection reference point (R2),

■ a calibration of the position code marking (3c) can be carried out by means of the read head (1) using the at least one detection distance with the aid of the calibration functionality,

**characterized in that**

■ the substrate (5) is manufactured from a dimensionally-durable and aging-resistant material having a linear coefficient of thermal expansion having an absolute value in the range of 0 to at most $5 \cdot 10^{-6}$ $K^{-1}$,

■ whereby the linear encoder (100) is provided for the high-precision calibration with at least one standard (s), which is defined by the at least one detection distance, having a relative error in the range of at most $5 \cdot 10^{-6}$.

2. Linear encoder (100) according to Claim 1, **characterized in that**
the read head (1) has a precision measuring unit (10) for the high-precision determination of the at least one detection distance with a relative error in the range of at most $5 \cdot 10^{-6}$.

3. Linear encoder (100), having

■ a control and analysis unit (2) having storage unit and calibration functionality,
■ a mass embodiment (3) having a position code marking (3c) made of code elements (20),
■ a read head (1) having a sensor unit (4), wherein read head (1) and mass embodiment (3) are movable in relation to one another, and wherein

o the sensor unit (4) has at least one first, trailing detection reference point (R1), and at least one second, leading detection reference point (R2), which are fixed spaced apart from one another by means of a substrate (5), wherein a detection distance is established in each case between two detection reference points (R1, R2),
o at least two code elements (20a-d, 27a-c, 28a-c) are detectable in one step by means of the sensor unit (4), which means, that a detection with unchanged relative positioning of the read head (1) in relation to the mass embodiment (3) can be performed so that at least one code element (20a-d, 27a-c, 28a-c) is detected in relation to the first detection reference point (R1) and at least one code element (20a-d, 27a-c, 28a-c) is detected in relation to the second detection reference point (R2),

■ a calibration of the position code marking (3c) can be carried out by means of the read head (1) using the at least one detection distance with the aid of the calibration functionality,

**characterized in that**

■ the read head (1) has a precision measuring unit (10) for the high-precision determination of the at least one detection distance with a relative error in the range of at most $5 \cdot 10^{-6}$,
■ whereby the linear encoder (100) is provided for the high-precision calibration with at least one standard (s), which is defined by the at least one detection distance, having a relative error in the range of at most $5 \cdot 10^{-6}$.

4. Linear encoder (100) according to any one of the preceding claims,
**characterized in that**

■ the standard (s) is at least sufficiently greater than the distance of code elements (20) to one another that in each case multiple, but at least two code elements (20) are located on the mass embodiment (3) within the length of one standard (s), and/or
■ the sensor unit (4) has at least two detection regions (A1, A2) each having one detection reference point (R1, R2), wherein each detection region (A1, A2) is designed to detect at least two code elements (39a, 40b, 20a, 27a, 28a) in one step.

5. Linear encoder (100) according to any one of the preceding claims,
**characterized in that**
the sensor unit (4) has a

■ line sensor or surface sensor (6L) having at least two detection regions (A1, A2) each having a detection reference point (R1, R2) or
■ at least two single sensors in the form of

o spot sensors each having one detection reference point (R1, R2, R3)
o and/or line and/or surface sensors (6F1, 6F2, 6F3) each having one detection region (A1, A2, A3) each having one detection reference point (R1, R2, R3),

and the control and analysis unit (2) is configured such that the distances (∆1-4) to one another can be determined of code elements (20a, 27a, 28a, 39a, 40b), which are detected in one detection region.

6. Linear encoder (100) according to any one of the preceding claims,
   **characterized in that**
   if a precision measuring unit (10) is provided, the high-precision determination of the at least one detection distance is performed optoelectronically, in particular wherein the precision measuring unit (10) is implemented as an interferometer, especially as a laser interferometer.

7. Linear encoder (100) according to any one of the preceding claims,
   **characterized in that**
   the absolute value of the coefficient of thermal expansion of the substrate material is, at least within a temperature range of 253K to 343K, in particular at least within a temperature range of 283K to 303K, in the range of 0 to $1 \cdot 10^{-6}$ $K^{-1}$, in particular of 0 to $6 \cdot 10^{-7}$ $K^{-1}$.

8. Linear encoder (100) according to any one of the preceding claims,
   **characterized in that**
   the sensor unit (4) has at least three different spaced-apart detection reference points (R1, R2, R3), whereby at least two different standards (s1, s2, s3) of different sizes are defined, in particular wherein one of the at least two standards (s1, s2, s3) is a first standard and a further standard is a second standard and the second standard is not an integer multiple of the first standard.

9. Linear encoder (100), having

   ▪ a control and analysis unit (2) having storage unit and calibration functionality,
   ▪ a mass embodiment (3) writable with a position code marking (3c) made of code elements (20),
   ▪ a read head (1) having a write-read unit (4'), wherein read head (1) and mass embodiment (3) are movable in relation to one another, and wherein

     o the write-read unit (4') has at least one first, trailing detection reference point (R1), and at least one second, leading write reference point (R3) which are fixed spaced apart from one another by means of a substrate (5), wherein a write-read distance (s') is established in each case between two reference points (R1, R2'),
     o by means of the write-read unit (4'), at least one code element (20a-d, 27a-c, 28a-c) is detectable and at least one code element (20a-d, 27a-c, 28a-d) is writable in one step, which means that a detection with unchanged relative positioning of the read head (1) in relation to the mass embodiment (3) can be performed so that at least one code element (20a-d, 27a-c, 28a-c) is written in relation to the first trailing detection reference point (R1) and at least one code element (20a-d, 27a-c, 28a-c) is written in relation to the second leading write reference point (R3),

**characterized in that**

   ▪ the substrate (5) is manufactured from a dimensionally-durable and aging-resistant material having a linear coefficient of thermal expansion having an absolute value in the range of 0 to at most $5 \cdot 10^{-6}$ $K^{-1}$,
   ▪ whereby the linear encoder (100) is provided with at least one standard, which is defined by the at least one write-read distance (s'), having a relative error in the range of at most $5 \cdot 10^{-6}$ for the high-precision calibration, or
   ▪ the read head (1) has a precision measuring unit (10) for the high-precision determination of the at least one write-read distance with a relative error in the range of at most $5 \cdot 10^{-6}$,
   ▪ whereby the linear encoder (100) is provided with at least one standard, which is defined by the at least one write-read distance (s'), having a relative error in the range of at most $5 \cdot 10^{-6}$ for the high-precision calibration.

10. Calibration method for a linear encoder (100) according to any one of Claims 1 to 8, in which a first calibration comb (K1) is formed by the following steps:

    a) in a first position of the read head (1), a first code element is detected as a start code element (20a) in relation to a trailing detection reference point (R1) and, in the same step, a second code element (20b) is detected in relation to a leading detection reference point (R2),
    b) the read head (1) is displaced into a second position in relation to the mass embodiment (3) until the second code element (20b) is detectable in relation to the trailing detection reference point (R1),
    c) the second code element (20b) is detected in relation to the trailing detection reference point (R1) and, in the same step, a further code element (20c) is detected in relation to the leading detection reference point (R2),

d) the read head (1) is displaced into further positions and steps b and c are repeated until the read head (1) has reached a desired point of the mass embodiment (3) or the last code element (20) of the mass embodiment (3) detectable in this manner,

**characterized in that**

e) in the course of the calibration method, the detection distance between the leading detection reference point (R2) and the trailing detection reference point (R1) is determined as a high-precision standard (s, s1-s3),

f) with the aid of the standard (s, s1-s3) thus defined, calculated position values (K20b, K20c) are calculated for the detected code elements (20a-c), and

g) calibrated position values are generated and stored based on the calculated position values (K20b, K20c).

11. Calibration method according to Claim 10 for a linear encoder (100), which has a precision measuring unit (10),
**characterized in that**
the high-precision determination of the standard (s, s1-s3) is performed for each calibration, in particular optoelectronically, especially by interferometry.

12. Calibration method according to Claim 10 for a linear encoder (100), which has a substrate (5) made of a dimensionally-durable and aging-resistant material having a coefficient of thermal expansion in the range of 0 to at most $5 \cdot 10^{-6}$ $K^{-1}$,
**characterized in that**
the high-precision determination of the standard (s, s1-s3) is performed before the final installation of the linear encoder (100).

13. Calibration method according to any one of Claims 10 to 12,
**characterized in that**

▪ the calculated position values (K20b, K20c, K27b, K27c, K28b, K28c) are calculated on the basis of a start position value (N20a, N27a, N28a) assigned to the start code element (20a, 27a, 28a) and on the basis of the standard (s, s1-s3), in particular wherein, for the calculation of a calculated position value for the second code element, a standard (s, s1-s3) is added to that start position value (N20a, N27a, N28a), which is assigned to the start code element (20a, 27a, 28a), and in each case a further standard (s, s1-s3) is added for each following further code element of the calibration comb and/or calculated position values (K20b, K20c, K27b, K27c, K28b, K28c) are stored as calibrated position values, and/or

▪ a calibration function, on the basis of which calibrated position values are determined and stored, is created on the basis of the calculated position values (K20b, K20c, K27b, K27c, K28b, K28c) for at least one section of the position code marking, and/or

▪ the difference between the calculated position value (K20b, K20c, K27b, K27c, K28b, K28c) and a target position value stored in the storage unit is formed with respect to a detected code element, wherein the value of the difference is stored as a correction value and the combination of target position value and correction value is used as calibrated position value.

14. Calibration method according to any one of Claims 10 to 13,
**characterized in that**
at least one further calibration comb (K2, K3) is formed and the calibration combs (K2, K3) are linked to one another, wherein the at least one further calibration comb (K2, K3) is formed by repeating the method steps of Claim 7 proceeding from a further code element to be detected as a start code element (27a, 28a), wherein the code element to be detected as the start code element (27a, 28a), when the read head (1) is located in the first calibration comb (K1) in its first position, is located within one standard (s, s1-s3) on the mass embodiment (3), and in fact directly adjacent to the first start code element (20a) or, separated by other code elements, adjacent to the first start code element (20a).

15. Calibration method according to any one of Claims 10 to 14,
**characterized in that**
code element distances ($\Delta 1$, $\Delta 2$) between adjacent code elements are measured and

▪ the measured code element distances ($\Delta 1$, $\Delta 2$) are used to link the calibration combs (K1-3) with one another, in particular by way of an equalization calculation, and/or

▪ the measured code element distances ($\Delta 1$, $\Delta 2$) are used to determine a calibrated position value for an adjacent code element proceeding from a calculated position value of a code element.

16. Calibration method according to Claim 15,
**characterized in that**
the standard (s, s1-s3) is used during the measurement operation to check the precision of the position code marking (3c).

**17.** Calibration method according to any one of Claims 10 to 16,
**characterized by**
optoelectronic or capacitive-electronic detection of code elements (20) or
magnetic-electronic or inductive-electronic detection of code elements (20).

**18.** Calibration method according to any one of Claims 10 to 17,
**characterized by**
a determination of calibrated position values for at least some code elements (20) on the basis of at least two standards (s, s1-s3), in particular on the basis of at least two different standards (s, s1-s3), wherein especially one of the at least two standards (s, s1-s3) is a first standard and a further standard is a second standard and the second standard is not an integer multiple of the first standard.

**19.** Computer program product, which is stored on a machine-readable carrier, having program code, for controlling or carrying out the method according to any one of Claims 11 to 18.

**Revendications**

**1.** Codeur linéaire (100), comportant

• une unité de commande et d'évaluation (2) ayant une unité de mémoire et une fonctionnalité d'étalonnage,
• une mesure matérialisée (3) comportant un marquage de code de position (3c) constitué d'éléments de code (20),
• une tête de lecture (1) ayant une unité de détection (4), dans lequel la tête de lecture (1) et la mesure matérialisée (3) sont mobiles l'une par rapport à l'autre, et dans lequel

o l'unité de détection (4) comporte au moins un premier point de référence de détection suivant (R1), et au moins un deuxième point de référence de détection précédent (R2), qui sont fixés de manière espacée l'un de l'autre par un substrat (5), de telle sorte qu'une distance de détection est respectivement établie entre deux points de référence de détection (R1, R2),
o lors d'une étape, au moins deux éléments de code (20a-d, 27a-c, 28a-c) peuvent être détectés au moyen de l'unité de détection (4), c'est-à-dire qu'une détection peut être effectuée lors d'un positionnement relatif non modifié de la tête de lecture (1) par rapport à la mesure matérialisée (3) de manière à ce qu'au moins un élément de code (20a-d, 27a-c, 28a-c) soit détecté par rapport au premier point de référence de détection (R1) et à ce qu'au moins un élément de code (20a-d, 27a-c, 28a-c) soit détecté par rapport au deuxième point de référence de détection (R2),

• à l'aide la fonctionnalité d'étalonnage, un étalonnage du marquage de code de position (3c) peut être effectué au moyen de la tête de lecture (1) en utilisant l'au moins une distance de détection, **caractérisé en ce que**
• le substrat (5) est fabriqué à partir d'un matériau dimensionnellement stable et durable ayant un coefficient de dilatation thermique linéaire dont la valeur se situe dans la plage de 0 à au plus $5 \cdot 10^{-6}$ K$^{-1}$,
• de telle sorte que le codeur linéaire (100) est prévu pour un étalonnage de haute précision au moyen d'au moins un étalon (s) défini par l'au moins une distance de détection avec une erreur relative se situant dans la plage d'au plus $5 \cdot 10^{-6}$.

**2.** Codeur linéaire (100) selon la revendication 1, **caractérisé en ce que** la tête de lecture (1) comporte un dispositif de mesure de précision (10) pour une détermination de haute précision de l'au moins une distance de détection avec une erreur relative se situant dans la plage d'au plus $5 \cdot 10^{-6}$.

**3.** Codeur linéaire (100), comportant

• une unité de commande et d'évaluation (2) ayant une unité de mémoire et une fonctionnalité d'étalonnage,
• une mesure matérialisée (3) comportant un marquage de code de position (3c) constitué d'éléments de code (20),
• une tête de lecture (1) ayant une unité de détection (4), dans lequel la tête de lecture (1) et la mesure matérialisée (3) sont mobiles l'une par rapport à l'autre, et dans lequel

o l'unité de détection (4) comporte au moins un premier point de référence de détection suivant (R1), et au moins un deuxième point de référence de détection précédent (R2), qui sont fixés de manière espacée l'un de l'autre par un substrat (5), de telle sorte qu'une distance de détection est respectivement établie entre deux points de référence de détection (R1, R2),
o lors d'une étape, au moins deux éléments de code (20a-d, 27a-c, 28a-c) peuvent être détectés au moyen de l'unité de détection (4), c'est-à-dire qu'une détection peut être effectuée lors d'un positionnement relatif non modifié de la tête de lecture (1) par rapport à la mesure matérialisée (3) de manière à ce qu'au moins un élément de code (20a-d, 27a-c, 28a-c) soit détecté par rapport au premier point de référence de détection (R1) et à ce qu'au moins un élément de code (20a-d, 27a-c, 28a-c) soit détecté par rapport au deuxième point de référence de détection (R2),

• à l'aide la fonctionnalité d'étalonnage, un étalonnage du marquage de code de position (3c) peut être effectué au moyen de la tête de lecture (1) en utilisant l'au moins une distance de détection, **caractérisé en ce que**
• la tête de lecture (1) comporte un dispositif de mesure de précision (10) pour une détermination de haute précision de l'au moins une distance de détection avec une erreur relative se situant dans la plage d'au plus $5 \cdot 10^{-6}$,
• de telle sorte que le codeur linéaire (100) est prévu pour un étalonnage de haute précision au moyen d'au moins un étalon (s) défini par l'au moins une distance de détection avec une erreur relative se situant dans la plage d'au plus $5 \cdot 10^{-6}$.

**4.** Codeur linéaire (100) selon l'une quelconque des revendications précédentes, **caractérisé en ce que**

• l'étalon (s) a une taille suffisamment supérieure à la distance d'éléments de code (20) les uns par rapport aux autres pour que plusieurs, mais au moins deux éléments de code (20) se trouvent respectivement sur la mesure matérialisée (3) en-deçà de la longueur d'un étalon (s), et/ou
• l'unité de détection (4) comporte au moins deux régions de détection (A1, A2) ayant respectivement un point de référence de détection (R1, R2), dans lequel chaque région de détection (A1, A2) est conçue pour la détection, lors d'une étape, d'au moins deux éléments de code (39a, 40b, 20a, 27a, 28a).

**5.** Codeur linéaire (100) selon l'une quelconque des revendications précédentes, **caractérisé en ce que** l'unité de détection (4) comporte un

• capteur linéaire ou un capteur bidimensionnel (6L) ayant au moins deux régions de détection (A1, A2) ayant chacune un point de référence de détection (R1, R2) ou comporte
• au moins deux capteurs individuels sous la forme

  ○ de capteurs ponctuels ayant chacun un point de référence de détection (R1, R2, R3)
  ○ et/ou de capteurs linéaires et/ou bidimensionnels (6F1, 6F2, 6F3) ayant chacun une région de détection (A1, A2, A3) chacune dotée d'un point de référence de détection (R1, R2, R3)

et l'unité de commande et d'évaluation (2) est configurée de manière à ce que les distances (Δ1-4) les uns par rapport aux autres d'éléments de code (20a, 27a, 28a, 39a, 40b) qui sont détectés dans une région de détection, puissent être déterminées.

**6.** Codeur linéaire (100) selon l'une quelconque des revendications précédentes, **caractérisé en ce que**, lors de la présence d'un dispositif de mesure de précision (10), la détermination de haute précision de l'au moins une distance de détection s'effectue de manière optoélectronique, notamment dans lequel le dispositif de mesure de précision (10) est réalisé sous forme d'interféromètre, en particulier, sous forme d'interféromètre laser.

**7.** Codeur linéaire (100) selon l'une quelconque des revendications précédentes, **caractérisé en ce que** la valeur du coefficient de dilatation thermique du matériau du substrat se situe au moins à l'intérieur d'une plage de température de 253K à 343K, notamment au moins à l'intérieur d'une plage de température de 283K à 303K, dans la plage de 0 à $1 \cdot 10^{-6}$ $K^{-1}$, notamment de 0 à $6 \cdot 10^{-7}$ $K^{-1}$.

**8.** Codeur linéaire (100) selon l'une quelconque des revendications précédentes, **caractérisé en ce que** l'unité de détection (4) comporte au moins trois points de référence de détection (R1, R2, R3) espacés différemment, de telle sorte qu'au moins deux étalons (s1, s2, s3) de tailles différentes sont définis, notamment dans lequel l'un des au moins deux étalons (s1, s2, s3) est un premier étalon et un autre étalon est un deuxième étalon et le deuxième étalon n'est pas un multiple entier du premier étalon.

**9.** Codeur linéaire (100), comportant

• une unité de commande et d'évaluation (2) ayant une unité de mémoire et une fonctionnalité d'étalonnage,
• une mesure matérialisée (3) pouvant être décrite par un marquage de code de position (3c) constitué d'éléments de code (20),
• une tête de lecture (1) comportant une unité d'écriture-lecture (4'), dans lequel la tête de lecture (1) et la mesure matérialisée (3) sont mobiles l'une par rapport à l'autre, et dans lequel

  ○ l'unité d'écriture-lecture (4') comporte au moins un premier point de référence de détection suivant (R1), et comporte au moins un deuxième point de référence d'écriture précédent (R3), qui sont fixés de manière espacée l'un de l'autre par un substrat (5), de telle sorte qu'une distance d'écriture-lecture (s') soit respectivement établie entre deux points de référence (R1, R2'),
o lors d'une étape, au moins un élément de code (20a-d, 27a-c, 28a-c) peut être détecté et au moins un élément de code 20a-d, 27a-c, 28a-d) peut être écrit au moyen de l'unité d'écriture-lecture (4'), c'est-à-dire qu'une détection peut être effectuée lors d'un positionnement relatif non modifié de la tête de lecture (1) par rapport à la mesure matérialisée (3), de manière à ce qu'au moins un élément de code (20a-d, 27a-c, 28a-c) soit écrit par rapport au premier point de référence de détection suivant (R1) et à ce qu'au moins un élément de code (20a-d, 27a-c, 28a-c) soit écrit par rapport au deuxième point de référence d'écriture précédent (R3), **caractérisé en ce que**

• le substrat (5) est fabriqué à partir d'un matériau dimensionnellement stable et durable ayant un coefficient de dilatation thermique linéaire dont la valeur se situe dans la plage de 0 à au plus $5 \cdot 10^{-6}$ $K^{-1}$,
• de telle sorte que le codeur linéaire (100) est prévu pour un étalonnage de haute précision au moyen d'au moins un étalon défini par l'au moins une distance d'écriture-lecture (s') avec une erreur relative se situant dans la plage d'au plus $5 \cdot 10^{-6}$, ou
• la tête de lecture (1) comporte un dispositif de mesure de précision (10) pour une détermination de haute précision de l'au moins une distance d'écriture-lecture avec une erreur relative se situant dans la plage d'au plus $5 \cdot 10^{-6}$,
• de telle sorte que le codeur linéaire (100) est prévu pour un étalonnage de haute précision au moyen d'au moins un étalon défini par l'au moins une distance d'écriture-lecture (s') avec une erreur relative se situant dans la plage d'au plus $5 \cdot 10^{-6}$.

10. Procédé d'étalonnage destiné à un codeur linéaire (100) selon l'une quelconque des revendications 1 à 8, dans lequel un premier peigne d'étalonnage (K1) est formé par les étapes suivantes :

a) à une première position de la tête de lecture (1), un premier élément de code est détecté par rapport à un point de référence de détection suivant (R1) en tant qu'élément de code de départ (20a) et, lors de la même étape, un deuxième élément de code (20b) est détecté par rapport à un point de référence de détection précédent (R2),
b) la tête de lecture (1) est déplacée à une deuxième position par rapport à la mesure matérialisée (3) jusqu'à ce que le deuxième élément de code (20b) puisse être détecté par rapport au point de référence de détection suivant (R1),
c) le deuxième élément de code (20b) est détecté par rapport au point de référence de détection suivant (R1) et, lors de la même étape, un autre élément de code (20c) est détecté par rapport au point de référence de détection précédent (R2),
d) la tête de lecture (1) est déplacée à d'autres positions et les étapes b et c sont répétées jusqu'à ce que la tête de lecture (1) atteigne un point souhaité de la mesure matérialisée (3) ou le dernier élément de code (20) pouvant être détecté de cette manière de la mesure matérialisée (3),

**caractérisé en ce que**,

e) au cours du processus d'étalonnage, la distance de détection entre le point de référence de détection précédent (R2) et le point de référence de détection suivant (R1) est déterminée en tant qu'étalon de haute précision (s, s1-s3),
f) à l'aide de l'étalon ainsi défini (s, s1-s3), des valeurs de position obtenues par calcul (K20b, K20c) sont calculées au niveau des éléments de code détectés (20a-c), et
g) sur la base des valeurs de position obtenues par calcul (K20b, K20c), des valeurs de position étalonnées sont générées et stockées.

11. Procédé d'étalonnage selon la revendication 10 destiné à un codeur linéaire (100) qui comporte un dispositif de mesure de précision (10),
**caractérisé en ce que** la détermination de haute précision de l'étalon (s, s1-s3) s'effectue pour chaque étalonnage, notamment de manière optoélectronique, en particulier, interférométrique.

12. Procédé d'étalonnage selon la revendication 10 destiné à un codeur linéaire (100), qui comporte un substrat (5) constitué d'un matériau dimensionnellement stable et durable ayant un coefficient de dilatation thermique se situant dans la plage de 0 à au plus $5 \cdot 10^{-6}$ $K^{-1}$,
**caractérisé en ce que** la détermination de haute précision de l'étalon (s, s1-s3) s'effectue avant le montage final du codeur linéaire (100).

13. Procédé d'étalonnage selon l'une quelconque des revendications 10 à 12, **caractérisé en ce que**

• les valeurs de position obtenues par calcul (K20b, K20c, K27b, K27c, K28b, K28c) sont calculées sur la base d'une valeur de position de départ (N20a, N27a, N28a) associée à l'élément de code de départ (20a, 27a, 28a) et sur la base de l'étalon (s, s1-s3), notamment dans lequel, pour calculer une valeur de position obtenue par calcul pour le deuxième élément de code, un étalon (s, s1-s3) est additionné à la valeur de position de départ (N20a, N27a, N28a) à laquelle est associé l'élément de code de départ (20a, 27a, 28a), et pour un autre élément de code suivant respectif du peigne d'étalonnage, un autre étalon (s, s1-s3) est respectivement additionné et/ou des valeurs de position obtenues par calcul (K20b, K20c, K27b, K27c, K28b, K28c) sont stockées en tant que valeurs de position étalonnées, et/ou

• sur la base des valeurs de position obtenues par calcul (K20b, K20c, K27b, K27c, K28b, K28c) pour au moins une partie du marquage de code de position, une fonction d'étalonnage est générée, sur la base de laquelle des valeurs de position étalonnées sont déterminées et stockées, et/ou

• par rapport à un élément de code détecté, la différence entre la valeur de position obtenue par calcul (K20b, K20c, K27b, K27c, K28b, K28c) et une valeur de position théorique stockée dans l'unité de mémoire est établie, dans lequel la valeur de la différence est stockée en tant que valeur de correction et la combinaison de la valeur de position théorique et de la valeur de correction est utilisée en tant que valeur de position étalonnée.

14. Procédé d'étalonnage selon l'une quelconque des revendications 10 à 13, **caractérisé en ce qu'**au moins un autre peigne d'étalonnage (K2, K3) est formé et **en ce que** les peignes d'étalonnage (K2, K3) sont combinés les uns aux autres, dans lequel l'au moins un autre peigne d'étalonnage (K2, K3) est formé par répétition des étapes de procédé de la revendication 7 à partir d'un autre élément de code devant être détecté en tant qu'élément de code de départ (27a, 28a), dans lequel l'élément de code devant être détecté en tant qu'élément de code de départ (27a, 28a) se trouve, lorsque la tête de lecture (1) se trouve à sa première position dans le premier peigne d'étalonnage (K1), à l'intérieur d'un étalon (s, s1-s3) sur la mesure matérialisée (3) et directement au voisinage du premier élément de code de départ (20a) ou séparé par d'autres éléments de code, au voisinage du premier élément de code de départ (20a).

15. Procédé d'étalonnage selon l'une quelconque des revendications 10 à 14, **caractérisé en ce que** des distances entre éléments de code (Δ1, Δ2), entre des éléments de code voisins, sont mesurées et

• les distances entre éléments de code mesurées (Δ1, Δ2) sont utilisées pour combiner les peignes d'étalonnage (K1-3) les uns aux autres, notamment par un calcul d'ajustement, et/ou

• les distances entre éléments de code mesurées (Δ1, Δ2) sont utilisées pour déterminer une valeur de position étalonnée pour un élément de code voisin à partir d'une valeur de position obtenue par calcul d'un élément de code.

16. Procédé d'étalonnage selon la revendication 15, **caractérisé en ce que** l'étalon (s, s1-s3) est utilisé pendant l'opération de mesure pour vérifier l'exactitude du marquage de code de position (3c).

17. Procédé d'étalonnage selon l'une quelconque des revendications 10 à 16, **caractérisé par** une détection optoélectronique ou électronique capacitive d'éléments de code (20) ou par une détection électronique magnétique ou électronique par induction d'éléments de code (20).

18. Procédé d'étalonnage selon l'une quelconque des revendications 10 à 17, **caractérisé par** une détermination de valeurs de position étalonnées pour au moins certains éléments de code (20) sur la base d'au moins deux étalons (s, s1-s3), notamment sur la base d'au moins deux étalons (s, s1-s3) différents, dans lequel l'un des au moins deux étalons (s, s1-s3) est en particulier un premier étalon et un autre étalon est un deuxième étalon et le deuxième étalon n'est pas un multiple entier du premier étalon.

19. Produit de programme d'ordinateur qui est stocké sur un support lisible par machine, comportant un code de programme permettant de commander ou de mettre en oeuvre le procédé selon l'une quelconque des revendications 11 à 18.

**2a**

**100**

**2b**

**2**

**1**

**4**

**3c**

**3**

*Fig. 1a*

**4**

**6**

**5**

**3q**

**3q**

**3**

**3e**

**3c**

*Fig. 1b*

Fig. 2a

Fig. 2b

100

2

1

s1

s3

s2

A1    A2    5    A3    4

6F1    6F2    6F3

3    R1    R3    R2    3c

*Fig. 2c*

100

2

1

2a

s'

4'

5

6    30

6p    3e

R1    3c    R2'    6b

3    6a

*Fig. 2d*

Fig. 3a

Fig. 3b

{N20a,K20b,K20c...} ← K1

Fig. 3c

Fig. 3d

s

s

R1

R2          R1

R2

2a

3c

20a

20b

20c

{N20a,K20b,K20c...} ◄─── K1

*Fig. 4a*

s

s

R1

R2          R1

R2

2a

3c

20a

27a          20b          27b          27c

{N27a,K27b,K27c...} ◄─── K2

*Fig. 4b*

s

s

R1

R2          R1

R2

2a

3c

20a

28a          20b          28b          28c

{N28a,K28b,K28c...} ◄─── K3

*Fig. 4c*

Fig. 5

Fig. 6a

Fig. 6b

Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 12175130 A
- DE 19608978 A1
- DE 19726173 A1
- WO 9935468 A1
- EP 1195880 A1
- EP 14155582 A

- DE 19604502 A1
- WO 0161280 A1
- US 2004189984 A1
- DE 102008055680 A1
- US 7608813 B1